# EUROPEAN PATENT SPECIFICATION

(11) **EP 3 518 498 B1**
(45) Date of publication and mention of the grant of the patent: **28.08.2024**
(21) Application number: 17850322.3
(22) Date of filing: 19.09.2017
(51) Int. Cl.: H04W 4/40, H04W 72/23, H04W 36/00, H04W 16/14, H04W 48/12, H04W 76/14, H04W 84/12, H04W 88/06, H04W 76/19, H04W 8/24

(54) **VEHICLE-TO-EVERYTHING OPERATION PROCESSING METHOD AND DEVICE**
FAHRZEUG-ZU-ALLEM-BETRIEBSVERARBEITUNGSVERFAHREN UND VORRICHTUNG
PROCÉDÉ DE TRAITEMENT D'OPÉRATION V2X (VEHICLE-TO-EVERYTHING) ET DISPOSITIF

(30) Priority: 19.09.2016 CN 201610834364
(43) Date of publication of application: 31.07.2019
(73) Proprietor: ZTE Corporation, Shenzhen, Guangdong 518057 (CN)
(72) Inventor: XU, Hui, Shenzhen Guangdong 518057 (CN); LU, Chen, Shenzhen Guangdong 518057 (CN); WANG, Yaying, Shenzhen Guangdong 518057 (CN); LV, Yong, Shenzhen Guangdong 518057 (CN)
(74) Representative: Regimbeau
(86) International application number: PCT/CN2017/102212
(87) International publication number: WO 2018/050121

(56) References cited:
- WO-A1-2014/173429
- WO-A1-2016/099137
- WO-A1-2016/122589
- CN-A- 104 363 658
- CN-A- 105 307 220
- CN-A- 105 592 509
- US-A1- 2017 367 025
- HUAWEI ET AL: "Configuration of PC5 and/or Uu for V2V transport", vol. RAN WG2, no. Dubrovnik, Croatia; 20160411 - 20160415, 2 April 2016 (2016-04-02), XP051082362, Retrieved from the Internet <URL:http://www.3gpp.org/ftp/tsg_ran/WG2_RL2/TSGR2_93bis/Docs/> [retrieved on 20160402]
- SAMSUNG: "DRSC Co-Existence with V2V ", 3GPP TSG RAN WG1 MEETING#84 R1-162702, 15 April 2016 (2016-04-15), XP051080354

## Description

### TECHNICAL FIELD

The present invention relates to the field of wireless communication technologies and, in particular, to a vehicle-to-everything service processing method and apparatus.

### BACKGROUND

With the rapid development of economy and society, the popularity and possession of automobiles have increased rapidly, and the frequent road traffic accidents have become one of the important factors affecting the public safety, so improvement of the safety design of vehicles is an important part of solving road traffic safety problems.

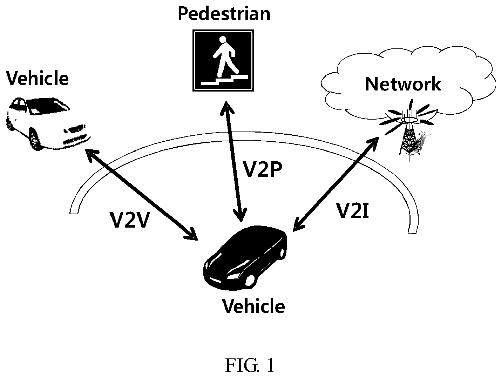

In a communication-based collision warning system, vehicle-to-everything (V2X), which employs advanced wireless communication technologies and a new generation of information processing technologies, implements real-time information interactions between vehicles and between vehicles and network devices (including base stations and roadside infrastructure), such that the vehicles and network devices know each other of the current status, such as position, speed, acceleration, driving route of the vehicle, acquire the road environment information, cooperatively detects road hazard conditions. The collision warning system provides various collision warning information in time. Thus, the road traffic accidents are reduced. Currently there are two technologies for implementing the vehicle-to-everything: dedicated short range communication (DSRC) and long time evolution (LTE). The DSRC technology is substantially mature and will be deployed in many countries. The LTE V2X technology is still at the stage of discussion and has no complete identification. The LTE V2X mainly uses two key transmission technologies: LTE device to device (D2D) (i.e., LTE D2D), and LTE multimedia broadcast multicast service (MBMS) (i.e., LTE MBMS). In the LTE D2D, V2X services are transmitted and received through the PCS interface or the sidelink interface. In the LTE MBMS, the V2X services are transmitted and received through the Uu interface. FIG. 1 is a schematic diagram of a system architecture for transmitting and/or receiving V2X services in an existing V2X communication. As shown in Figure 1, vehicle to vehicle (V2V) and vehicle to pedestrian (V2P) use the PCS interface, vehicle to infrastructure (V2I) uses the Uu interface, and V2V may also use the Uu interface. However, the LTE V2X communication in the existing art has the following problem: the source cell and the target cell may adopt the same V2X transmission technology or different V2X transmission technologies when the vehicle is in the moving state, that is, during the movement of the vehicle, causing that the latency requirement is difficulty to meet for the V2X service, that is, the V2X service has poor continuity and is even interrupted.

In summary, in the LTE V2X communication in the existing art, the continuity of the V2X service is poor or is likely interrupted because the vehicle is often in in a moving process. Further relevant technologies are also known from WO 2014/173429 A1 (ERICSSON TELEFON AB L M [SE]) 30 October 2014 (2014-10-30), which relates to a method for controlling vehicle-to-vehicle communication, HUAWEI ET AL: "Configuration of PCS and/or Uu for V2V transport", 3GPP DRAFT; R2-162289, RAN WG2, Dubrovnik, Croatia; 2 April 2016, which relates to configuration of PCS and/or Uu for V2V transport, CN 105 307 220 A, which relates to a switching method for device-to-device D2D business, and WO 2016/099137 A1, which relates to a method for cell switching in an unlicensed band and an apparatus using same.

### SUMMARY

The feature of the method and apparatus according to the present invention are defined in the independent claims. Further improvements are provided in the dependent claims.

In order to solve the above technical problem, embodiments of the present invention provide a vehicle-to-everything (V2X) service processing method and apparatus, to solve the problem of the existing LTE V2X communication that the V2X service has a poor continuity or is interrupted since the vehicle is usually in a moving process.

In a first aspect, an embodiment of the present invention provides a vehicle-to-everything (V2X) service processing method. The method includes:
obtaining, by a terminal device, pre-configuration information or V2X configuration information of a target area; and
sending and/or receiving, by the terminal device, a corresponding V2X service in the target area by using a licensed spectrum or an unlicensed spectrum according to the pre-configuration information or the V2X configuration information of the target area;
   wherein in response to V2X communication in a source area being performed using a PCS interface and/or a Uu interface and the V2X communication in the target area being performed using the unlicensed spectrum, or in response to the V2X communication in the source area being performed using the unlicensed spectrum and the V2X communication in the target area being performed using the PCS interface and/or the Uu interface, before obtaining, by the terminal device, the pre-configuration information in the terminal device, the method further comprises:
   determining, by the terminal device, whether to use a pre-configuration resource for the V2X communication; and
   wherein the obtaining, by the terminal device, the pre-configuration information saved in the terminal device or V2X configuration information of the target area comprises:
   in response to the terminal device determining to use the pre-configuration resource for performing the V2X communication, obtaining the pre-configuration information saved in the terminal device, wherein the pre-configuration information saved in the terminal device comprises one or more of: synchronization information, a sending resource, a receiving resource, a SIB, a MCCH, and a SC-MCCH; and
in response to the terminal device determining not to use the pre-configuration resource for performing the V2X communication, receiving, the V2X configuration information of the target area sent by the access network device.

In a second aspect, an embodiment of the present invention provides a vehicle-to-everything (V2X) service processing method. The method includes:
obtaining, by an access network device, V2X configuration information of a target area of a terminal device; and
sending, by the access network device, the V2X configuration information of the target area to the terminal device, so that the terminal device sends and/or receives a corresponding V2X service by using a licensed or unlicensed spectrum in the target area;
wherein in response to V2X communication in a source area being performed using a PCS interface and/or a Uu interface and the V2X communication in the target area is performed using the unlicensed spectrum, or in response to the V2X communication in the source area being performed using the unlicensed spectrum and the V2X communication in the target area is performed using the PC5 interface and/or the Uu interface, the sending, by the access network device, the V2X configuration information of the target area to the terminal device comprises:
in response to the terminal device determining not to use a pre-configuration resource due to receiving indication from the access network device for performing the V2X communication by using a cross-carrier scheduled resource, sending, by the access network device, the V2X configuration information of the target area to the terminal device.

In a third aspect, an embodiment of the present invention provides a vehicle-to-everything (V2X) service processing apparatus. The apparatus is configured in a terminal device and includes:
an obtaining module, which is configured to obtain pre-configuration information or V2X configuration information of a target area; and
a V2X service module, which is configured to send and/or receive a corresponding V2X service the target area by using a licensed spectrum or an unlicensed spectrum in according to the pre-configuration information or V2X configuration information of the target area obtained by the obtaining module;
   wherein in response to V2X communication in a source area being performed using a PCS interface and/or a Uu interface and the V2X communication in the target area being performed using the unlicensed spectrum, or in response to the V2X communication in the source area being performed using the unlicensed spectrum and the V2X communication in the target area being performed using the PCS interface and/or the Uu interface, the apparatus further comprises:
      a determining module, configured to determine whether to use a pre-configuration resource for performing the V2X communication before the obtaining module obtains the pre-configuration information in the terminal device;
   wherein the obtaining module obtaining the pre-configuration information in the terminal device or the V2X configuration information of the target area comprises:
      in response to the determining module determining to use the pre-configuration resource for performing the V2X communication, obtaining the pre-configuration information in the terminal device, wherein the pre-configuration information saved in the terminal device comprises one or more of: synchronization information, a sending resource, a receiving resource, a system information block, SIB, a multicast control channel, MCCH, and a single cell-multicast control channel, SC-MCCH; and
in response to the determining module determining not to use the pre-configuration resource for performing the V2X communication, receiving the V2X configuration information of the target area sent by the access network device.

In a fourth aspect, an embodiment of the present invention provides a computer-readable storage medium. The computer-readable storage medium stores computer programs, where the computer programs, when executed, implement the methods described in the first aspect.

In the V2X service processing method and apparatus, the terminal device obtains pre-configuration information or V2X configuration information of a target area, and sends and/or receives a corresponding V2X service in the target area by using a licensed spectrum or an unlicensed spectrum according to the obtained pre-configuration information V2X or the configuration information of the target area,. In the embodiments of the present invention, the terminal device sends and/or receives the V2X service by using the licensed spectrum or the unlicensed spectrum, and the source area and the target area may use the same transmission technology or different transmission technologies. Thus, the latency of sending and/or receiving the V2X service after the terminal device moves to the target area can be greatly reduced, thereby effectively ensuring the continuity of the V2X service. The embodiment of the present invention solves the problem of the existing LTE V2X communication that the V2X service has a poor continuity and is likely interrupted since the vehicle is usually in a moving process.

### BRIEF DESCRIPTION OF DRAWINGS

The drawings are used to provide a further understanding of the technical solutions of the present invention, constitute a part of the specification, explain the technical solutions of the present invention in conjunction with the embodiments of the present application, and do not limit the technical solutions of the present invention.
FIG. 1 is an architecture diagram of a system for sending and/or receiving a V2X service in V2X communication in the existing art;
FIG. 2 is an architecture diagram of a system for sending and/or receiving the V2X service via a Uu interface in the V2X communication in the existing art;
FIG. 3 is a flowchart of a V2X service processing method according to an embodiment of the present invention;
FIG. 4 is a flowchart of another V2X service processing method according to an embodiment of the present invention;
FIG. 5 is a flowchart of another V2X service processing method according to an embodiment of the present invention;
FIG. 6 is a schematic diagram of an application scenario of a V2X service processing method according to an embodiment of the present invention;
FIG. 7 is a schematic diagram of another application scenario of a V2X service processing method according to an embodiment of the present invention;
FIG. 8 is a schematic diagram of another application scenario of a V2X service processing method according to an embodiment of the present invention;
FIG. 9 is a schematic diagram of another application scenario of a V2X service processing method according to an embodiment of the present invention;
FIG. 10 is a flowchart of another V2X service processing method according to an embodiment of the present invention;
FIG. 11 is a flowchart of another V2X service processing method according to an embodiment of the present invention;
FIG. 12 is a flowchart of signaling interaction of a V2X service processing method according to an embodiment of the present invention;
FIG. 13 is a flowchart of signaling interaction of another V2X service processing method according to an embodiment of the present invention;
FIG. 14 is a flowchart of signaling interaction of another V2X service processing method according to an embodiment of the present invention;
FIG. 15 is a flowchart of signaling interaction of another V2X service processing method according to an embodiment of the present invention;
FIG. 16 is a structural diagram of a V2X service processing apparatus according to an embodiment of the present invention;
FIG. 17 is a structural diagram of another V2X service processing apparatus according to an embodiment of the present invention;
FIG. 18 is a structural diagram of another V2X service processing apparatus according to an embodiment of the present invention;
FIG. 19 is a structural diagram of another V2X service processing apparatus according to an embodiment of the present invention;
FIG. 20 is a structural diagram of another V2X service processing apparatus according to an embodiment of the present invention; and
FIG. 21 is a structural diagram of a V2X system according to an embodiment of the present invention.

### DETAILED DESCRIPTION

The following examples/aspects/ embodiments in which the source area and the target area may use the same V2X transmission technology, are not according to the invention and are present for illustration purposes only.

Objects, technical solutions and advantages of the present invention will be clearer from a detailed description of embodiments of the present invention in conjunction with the drawings. It is to be noted that if not in collision, the embodiments and features therein in the present application may be combined with each other.

The steps illustrated in the flowcharts of the drawings may be executed by, for example, a set of computer-executable instructions in a computer system. Moreover, although the flowcharts illustrate a logical order of execution, the steps illustrated or described may, in some cases, be executed in an order different from that herein.

With the popularization of automobiles, road traffic safety has become one of the basic problems affecting harmony of the society and improvement of people's livelihood. The traffic safety urgently needs improvement in terms of technology, policy, education, etc. Among them, the improvement of vehicle safety design is an important part of solving the road traffic safety problem. In the existing art, the technology for improving vehicle safety mainly includes the passive safety technology and the active safety technology. The passive safety technology is used to protect people and articles inside and outside the vehicle after an accident occurs. The active safety technology is used to prevent and reduce vehicle accidents and avoid people from injuries. The active safety technology is the focus and trend of modern vehicle safety technology development. Therefore, the vehicle-to-everything (V2X) technology has become a new way to solve the road traffic safety problem. The V2X technology refers to: providing vehicle information by means of sensors, vehicle-mounted terminals and electronic tags mounted on vehicles, implementing vehicle-to-vehicle (V2V), vehicle-to-pedestrian (V2P) and vehicle-to-infrastructure (V2I) intercommunication by using various communication technologies, effectively using, such as extracting or sharing, information on an information network platform, effectively managing the vehicles and providing comprehensive services.

Currently the technology for implementing the V2X mainly includes DSRC and LTE. The DSRC is based on IEEE802.11P standards and IEEE1609 standards defined by the institute of electrical and electronics engineers (IEEE). The IEEE802.11P specifics physical layer and medium access control (MAC) technologies and the IEEE1609 specifics upper specifications. The LTE-based V2X technology is in an initial discussion stage and has no well-established standards.

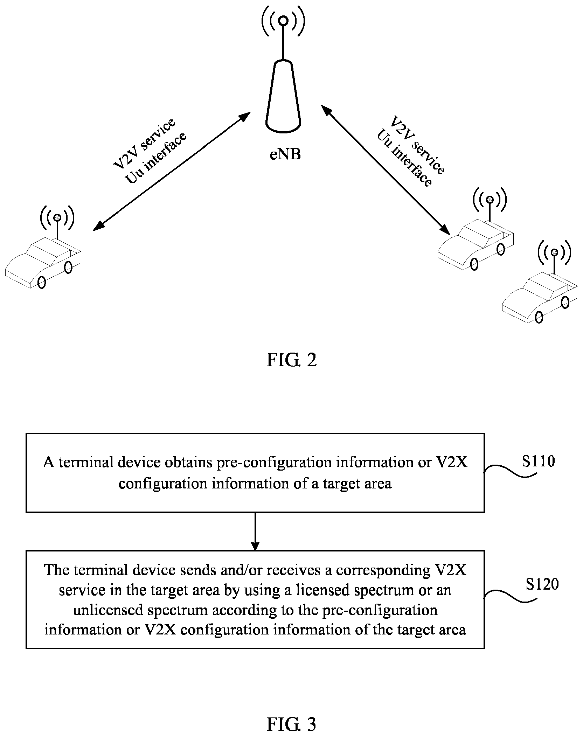

The LTE V2X technology currently discussed in the 3rd Generation Partnership Project (3GPP) includes a technology that an road side unit (RSU) is implemented through a still user equipment (UE) or base station (BS) and V2V/V2I/V2P which may be implemented through a PCS interface or a Uu interface. The PCS interface refers to a device-to-device (D2D) air interface and the Uu interface refers to an air interface from the UE to the eNB. FIG. 2 is an architecture diagram of a system for sending and/or receiving the V2X service via the Uu interface in the V2X communication in the existing art.

To effectively utilize mobile network resources, the 3GPP proposes an LTE MBMS technology. The MBMS is a technology for transmitting data from one data source to multiple target mobile terminals, achieving sharing of network (including a core network and an access network) resources and improving a utilization rate of network resources (especially air interface resources). LTE-Advanced (LTE-A) at the 3GPP Release 13 (R13) proposes a research topic of a single cell-MBMS. The single cell-MBMS traffic is transmitted on a physical downlink shared channel (PDSCH). In a 3GPP network, the MBMS traffic is identified by a temporary mobile group identity (TMGI), and the TMGI is allocated by a broadcast multicast-service center (BM-SC). An application server (AS) notifies the UE of related service description information such as the TMGI and service start time through application layer signaling. Single cell point-to-multipoint (SC-PTM) is another method for transmitting a broadcast service on the PDSCH. A multimedia broadcast single frequency network (MBSFN) has the same core network as the SC-PTM. In the access network, a multi-cell/multicast coordination entity (MCE) determines to use the MBSFN or the SC-PTM for sending the broadcast service via the air interface. A traffic safety service generally is directed to multiple vehicles in a certain area. Downlink broadcast transmission is an efficient way. Downlink unicast transmission is difficult to meet capacity requirements of the V2X service according to a simulation evaluation. A vehicle which sends the V2X service is moving at a high speed, and a service area or a service cell may frequently change. In practical applications, if the vehicle (or the UE) enters an MBMS service area, the vehicle (or the UE) needs to first read a user service description (USD). The USD includes a service identifier, a deployment frequency, start/end time, the service area and the like. The UE determines a required V2X service according to the USD, monitors control information of the required V2X service, and reads the required V2X service.

At present, the DSRC based on IEEE802.11P has become the V2X standard in Europe and America. The IEEE802.11P technology is basically mature and will be deployed in many countries. The V2X standard and deployment of 3GPP LTE fall behind the DSRC. It is estimated that the two technologies will coexist and be deployed in a mixed manner for a long time. The DSRC uses the unlicensed spectrum, such as 5.9 gigahertz (GHz), and the LTE V2X may use the licensed spectrum (such as around 2 GHz) or the unlicensed spectrum of 5.9 GHz. As described in the above background, the LTE V2X mainly includes two key transmission technologies, LTE D2D and LTE MBMS, which have the following problems. When the vehicle is in the moving state, that is, during the movement of the vehicle, if the source cell and the target cell use the same V2X transmission technology, the latency requirement is difficulty to meet for the V2X service, that is, the continuity of the V2X service is poor, if the source cell and the target cell use different V2X transmission technologies, no effective V2X service transmission solution has been proposed yet, that is, the V2X service may be interrupted.

The technical solutions of the present invention are described in detail below through specific embodiments. The entities executing interactions in the embodiments described below of the present invention include a terminal device and an access network device. The terminal device may include one of: a vehicle, an on board unit (OBU), a UE, and a terminal device placed on the vehicle. The access network device may include one of: a base station (BS), an evolved Node B (eNB), and an RSU. The RSU may receive the request of the terminal device, ensures that the terminal device accesses the Internet, has the gateway function, and also has the functions of data calculation, storage, and forwarding. The specific embodiments provided by the present invention may be combined with each other, and identical or similar concepts or processes may not be repeated in some embodiments.

FIG. 3 is a flowchart of a V2X service processing method according to an embodiment of the present invention. The V2X service processing method provided in the embodiment is applicable in the V2X communication. The method may be executed by a V2X service processing apparatus. The V2X service processing apparatus is implemented through a combination of hardware and software, and may be integrated in the processor of the terminal device that performs the V2X communication, and invoked and used by the processor. As shown in FIG. 3, the method in the embodiment may include the steps described below.

In step S110, a terminal device obtains V2X configuration information or pre-configuration information of a target area.

In the embodiment of the present invention, a V2X communication manner is provided for a terminal device in a V2X system moves in different areas. The terminal device in the V2X system is usually in the moving process, such as moving from a source area to a target area. The moving of the terminal from the source area to the target area is a moving process. In order to meet the requirement of V2X service continuity after area changing, the terminal device can obtain V2X configuration information of the target area or pre-configuration in the terminal device when the terminal is in the source area. Generally, the terminal device can obtain the V2X configuration information of the target area when the V2X communication in the target area is performed using a Uu interface or a PCS interface or using the Uu interface and/or the PCS interface; and the terminal device can obtain the pre-configuration information when the V2X communication in the target area is performed using the unlicensed spectrum, that is, when the target area is a non-coverage area, or when the V2X communication in the source area is performed using the unlicensed spectrum and the V2X communication in the target area is performed via the Uu interface and/or the PCS interface.

It should be noted that the area in the embodiment of the present invention may include a cell or a non-coverage area. The cell may refer to an area covered by the access network device. The non-coverage area may refer to an area not covered by any access network device, that is, an area in which the V2X communication is performed by using the unlicensed spectrum. In addition, the terminal device in the embodiment of the present invention may perform the V2X communication in the area covered by the access network device in a radio resource control (RRC) connection mode.

In step S120, in the target area, the terminal device sends and/or receives, according to the V2X configuration information or pre-configuration information of the target area, a corresponding V2X service by using a licensed spectrum or an unlicensed spectrum.

The terminal device in the embodiment of the present invention obtains the V2X configuration information or pre-configuration information of the target area for performing the V2X communication in the target area. Generally, when the V2X transmission technologies in the target areas are different, the contents of the obtained V2X configuration information or pre-configuration information are different. Therefore, the terminal device may use the licensed spectrum or the unlicensed spectrum to send and/or receive the corresponding V2X service in the target area according to the actually obtained content of the V2X configuration information or pre-configuration information of the target area. In addition, the target area in the embodiment of the present invention may be a cell with an LTE spectrum, that is, a licensed spectrum may be used to send and/or receive a V2X service; and the target area may also be a cell without an LTE spectrum, that is, an unlicensed spectrum may be used to send and/or receive a V2X service.

It should be understood that, if the terminal device obtains the V2X configuration information or pre-configuration information of the target area when being in the target area, and then uses the licensed spectrum or the unlicensed spectrum to send and/or receive the V2X service in the target area according to the obtained V2X configuration information or pre-configuration information, the V2X service latency is generally more than 100 milliseconds (ms). The V2X system is used for ensuring road traffic safety and has high requirements on latency, so the latency of more than 100 ms cannot meet requirements of the V2X communication on low latency. In the V2X service processing method provided by the embodiment of the present invention, the terminal device obtains the information for performing the V2X communication in the target area when the terminal device is in the source area, this is, before the terminal device moves to the target area. Therefore, after the terminal device enters the target area, the terminal device may directly send and/or receive corresponding services by using the licensed or unlicensed spectrum according to the obtained V2X configuration information or pre-configuration information.

It should be noted that in the embodiment of the present invention, the source area and the target area may use the same V2X transmission technology or different V2X transmission technologies. Therefore, even if the terminal device is handed over between areas with different transmission technologies, the terminal device can obtain information for performing V2X communication in the target area before moving to the target area, and the interruption of the V2X service is avoided, which has the same technical effect as when the terminal device is handed over between areas with the same transmission technology, thereby ensuring the continuity of the V2X service.

In the V2X service processing method provided by the embodiment, the terminal device obtains V2X configuration information or pre-configuration information of the target area, and sends and/or receives, in the target area, corresponding V2X services by using a licensed spectrum or an unlicensed spectrum according to the obtained V2X configuration information or pre-configuration information of the target area. In the method provided by the embodiment, the terminal device sends and/or receives the V2X service in the target area by using the licensed spectrum or the unlicensed spectrum, and the source area and the target area may use the same V2X transmission technology or different V2X transmission technologies. Thus, the latency of the V2X service transmission and reception when the terminal device moves into the target area can be greatly reduced, thereby effectively ensuring the continuity of the V2X service. The embodiment solves the problem in the existing LTE V2X communication that the V2X service has a poor continuity and is likely interrupted since the vehicle is usually in a moving process.

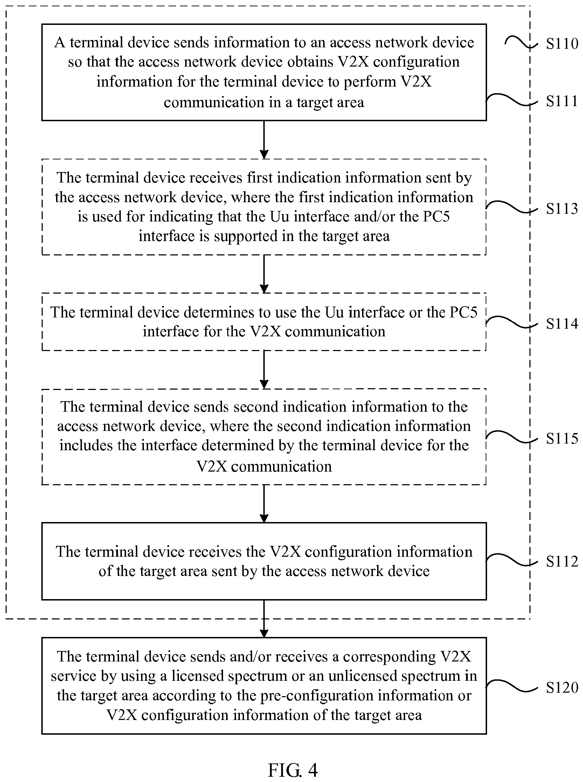

Alternatively, FIG. 4 is a flowchart of another V2X service processing method according to an embodiment of the present invention. The implementation manner the terminal device obtains the V2X configuration information of the target area is on the basis of the above-mentioned embodiment shown in FIG. 3, that is, the step S110 may include a step S111 and a step S 112.

In step S111, the terminal device sends information to the access network device so that the access network device obtains the V2X configuration information for the terminal device to perform V2X communication in the target area. The access network device is a source access network device or a target access network device.

The information in the embodiment of the present invention includes one or more of: measurement report information, resource request information, and interest/capability indication information. The resource request information is used for requesting a Uu interface or PCS interface resource, and the interest/capability indication information is used for indicating a capability of the terminal device to receive a V2X service via a PCS interface or a Uu interface.

In step S112, the terminal device receives the V2X configuration information of the target area sent by the access network device.

In practical applications, the transmission technology in the source area in the embodiment of the present invention may include V2V communication by using a Uu interface, by using a PCS interface, by using a Uu interface and/or by using a PCS interface, or by using an unlicensed spectrum; and the transmission technology in the target area may include V2V communication by using a Uu interface, by using a PCS interface, by using a Uu interface and/or a by using PC5 interface, or by using an unlicensed spectrum.

It should be noted that the above-mentioned source access network device is the access network device to which the source area belongs, and the target access network device is the access network device to which the target area belongs. When the V2X communication in the source area is performed using the Uu interface and/or the PCS interface, the above-mentioned access network device is the source access network device. When the V2X communication in the source area is performed using the unlicensed spectrum, the above-mentioned access network device is the target access network device.

It also should be noted that the V2X communication in the target area using the Uu interface and/or the PCS interface refers to that the Uu interface and the PCS interface are simultaneously supported in the target area. Different interfaces, such as the Uu interface or the PCS interface, may be used for different V2X services. For example, different interfaces are used for different terminal devices, or different interfaces are used for different V2X services of a same terminal device.

Further, in the embodiment of the present invention, if the V2X communication in the target area is performed using the Uu interface and/or the PCS interface, the method provided by the embodiment may further include steps S113, S114 and S115 before the step S112.

In step S113, the terminal device receives first indication information sent by the access network device. The first indication information is used for indicating that the Uu interface and/or the PCS interface are supported in the target area.

In step S114, the terminal device determines to use the Uu interface or the PCS interface for the V2X communication.

In step S115, the terminal device sends second indication information to the access network device. The second indication information includes the interface determined by the terminal device for performing the V2X communication.

In the embodiment of the present invention, a higher layer of the terminal device determines to use the Uu interface or the PCS interface. The access network device notifies the terminal device that the Uu interface and the PCS interface are supported in the target area, an access stratum of the terminal device notifies the higher layer such as an application layer of this, and the application layer determines to use which one of the interfaces for V2X communication and notifies the access stratum of the selected interface, the access stratum of the terminal device indicates the selected interface to the access network device, and the access network device sends V2X corresponding configuration information of the interface in the target area to the terminal device.

Alternatively, in the embodiment of the present invention, when the V2X communication in the target area is performed using the Uu interface or when the terminal device determines to use the Uu interface for the V2X communication, the V2X configuration information of the target area includes one or more of: a system information block (SIB) (e.g., SIB 13 or SIB20), a multicast control channel (MCCH), and a single cell-multicast control channel (SC-MCCH), and the V2X configuration information of the target area may further include a V2X frequency. When the V2X communication in the target area is performed via the PCS interface or when the terminal device determines to use the PCS interface for performing the V2X communication, the V2X configuration information of the target area includes one or more of: synchronization information, a sending resource, and a receiving resource.

It should be noted that in the embodiment of the present invention, the source area and the target area may be in the coverage area of a same access network device, or the source area and the target area are in coverage areas of different access network devices, or the source area or the target area is not covered by any access network device.

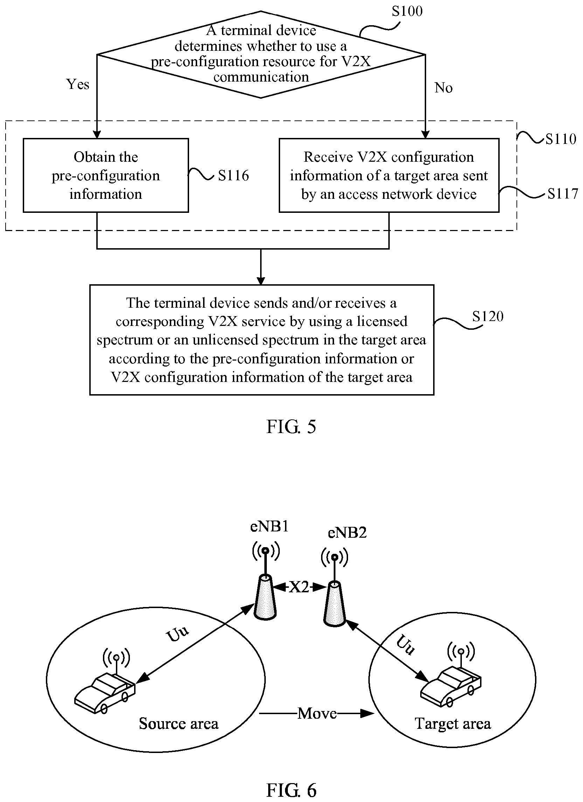

Alternatively , FIG. 5 is a flowchart of another V2X service processing method according to an embodiment of the present invention. On the basis of the embodiment illustrated in FIG. 3, when the V2X communication in the source area is performed using the PCS interface and/or the Uu interface and the V2X communication in the target area is performed using the unlicensed spectrum, or when the V2X communication in the source area is performed using the unlicensed spectrum and the V2X communication in the target area is performed using the PCS interface and/or the Uu interface, the method may further include a step S 100 before the step 5110.

In step S100, the terminal device determines whether to use a pre-configuration resource for performing the V2X communication. Upon determining to use the pre-configuration resource for performing the V2X communication, a step S116 is performed. Upon determining to not use the pre-configuration resource for performing the V2X communication, a step S 117 is performed.

Correspondingly, the step S110 may include the step S116 and the step S117.

In step S116, the pre-configuration information is obtained. The pre-configuration information includes one or more of: synchronization information, a sending resource, a receiving resource, an SIB, an MCCH, and an SC-MCCH.

In step S117, V2X configuration information of the target area sent by the access network device is received.

In the embodiment, when the V2X communication in the target area is performed using the unlicensed spectrum, it indicates that no LTE frequency is deployed for the V2X service in the target area, or that no LTE V2X cell exists in the target area. Since no LTE V2X cell exists in the target area, the terminal device may send and/or receive the required V2X service in the target area in two manners described below. In the first manner, the pre-configuration information is obtained. The pre-configuration information on the unlicensed spectrum is saved in the universal integrated circuit card (UICC) or the memory of the terminal device, and the terminal device may directly obtain the pre-configuration information. In the second manner, the source access network device performs cross-carrier scheduling. The source access network device schedules a V2X resource on the unlicensed spectrum and notifies the terminal device. For example, the source access network device sends the configuration information for the V2X communication in the target area to the user equipment through downlink control information (DCI) and RRC signaling on the physical downlink control channel (PDCCH) or the enhanced physical downlink control channel (EPDCCH).

Based on different transmission technologies used in the source area and the target area, the V2X service processing method provided by the embodiments of the present invention is described below through several common application scenarios.

The embodiments according to FIGS. 6-9 and described as below are not part of the present invention.

In an application scenario 1, the V2X communication in the source area and the V2X communication in the target area are both performed using the Uu interface.

FIG. 6 is a schematic diagram of the application scenario of the V2X service processing method according to an embodiment of the present invention. In the exemplary application scenario shown in FIG. 6, the source area and the target area are coverage areas of different access network devices. For example, the source access network device is an eNB 1, and the target access network device is an eNB2.

In the application scenario shown in FIG. 6, the terminal device sends a measurement report of the Uu interface to the eNB 1, and the eNB1 determines a target area to which the terminal device is to be handed over. If the terminal device obtains the V2X configuration information such as the SIB, MCCH or SC-MCCH when the terminal device enters the target area and then sends and/or receives V2X services according to the V2X configuration information, the latency is generally more than 100 ms, which cannot meet the continuity requirements of the V2X service. Therefore, the terminal device needs to obtain the V2X configuration information of the target area before entering the target area. The V2X configuration information may be obtained in the following manner. The eNB 1 determines that the terminal device will be handed over to the coverage area of the eNB2, and the eNB 1 obtains the V2X configuration information of the target area from the eNB2 via an X2 interface and sends the obtained V2X configuration information to the terminal device. For example, the eNB 1 sends the obtained V2X configuration information to the terminal device through the broadcast signaling or RRC connection reconfiguration signaling. The V2X configuration information may include one or more of: an SIB 13, an SIB20, an MCCH, and an SC-MCCH.

It should be noted that, in the application scenario shown in FIG. 6, the target area and the source area have the same frequency or different frequencies.

In an application scenario 2, the V2X communication in the source area and the V2X communication in the target area are both performed using the PCS interface.

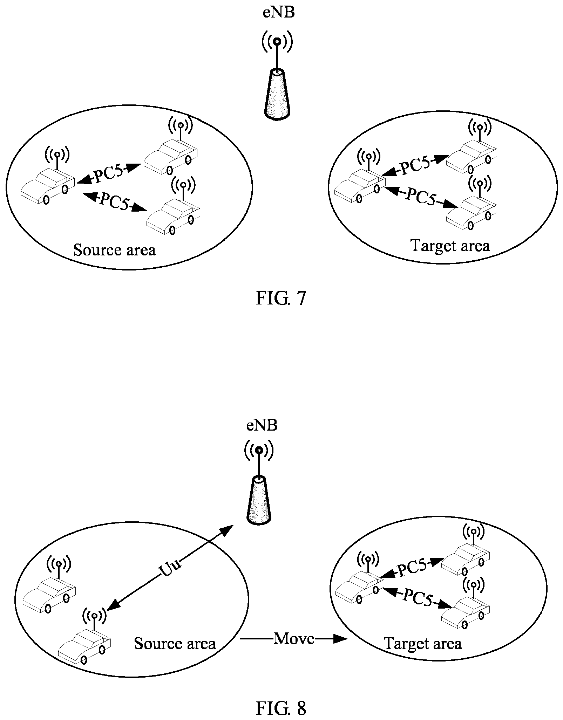

FIG. 7 is a schematic diagram of another application scenario of the V2X service processing method according to the embodiment of the present invention. In the exemplary application scenario shown in FIG. 7, the source area and the target area are in the coverage area of a same access network device. For example, the source access network device and the target access network device are both the eNB.

In the application scenario shown in FIG. 7, the terminal device continues to use the PCS interface for sending and/or receiving the V2X service. In order to use the PCS interface for sending and/or receiving the V2X service, the terminal device needs to obtain synchronization information, a sending resource and a receiving device of the PCS interface of the target area. Similar to the application scenario shown in FIG. 6, if the terminal device obtains the above configuration information after entering the target area, the requirement that the latency for the V2X service should be less than 100 ms cannot be met. Therefore, the terminal device needs to obtain the above configuration information before moving into the target area. In practical applications, the eNB obtains the V2X configuration information of the target area. In the application scenario shown in FIG. 7, the source access network device and the target access network device are the same device, that is, the eNB. Therefore, the eNB knows the V2X configuration information of the target area. If the source access network device and the target access network device are different devices, the source access network device may obtain the V2X configuration information of the target area from the target access network device via the X2 interface. Subsequently, the eNB sends the above V2X configuration information to the terminal device through the broadcast signaling or the RRC connection reconfiguration signaling. The V2X configuration information may include one or more of: synchronization information, a sending resource, and a receiving resource. If the terminal device sends and/or receives the V2X service in the target area with autonomously selecting resources, the terminal device randomly selects or selects by sensing the sending resource in the received sending resource pool.

In an application scenario 3, the V2X communication in the source area is performed using the Uu interface and the V2X communication in the target area is performed using the PCS interface.

FIG. 8 is a schematic diagram of another application scenario of the V2X service processing method according to the embodiment of the present invention. In the exemplary application scenario shown in FIG. 8, the source area and the target area are in the coverage area of the same access network device. For example, the source access network device and the target access network device are both the eNB.

In the application scenario shown in FIG. 8, the terminal device sends and/or receives the V2X service using the PCS interface in the target area. The terminal device obtains the V2X configuration information of the target area before entering the target area in a same implementation manner as the manner described in the application scenario 2. The content of the V2X configuration information is also the same as that in the application scenario 2. Therefore, details are not described herein again.

In an application scenario 4, the V2X communication in the source area is performed using the PCS interface and the V2X communication in the target area is performed using the Uu interface.

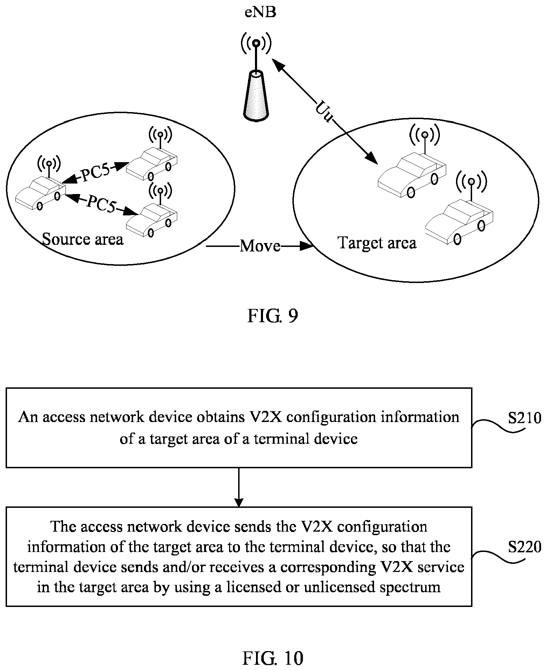

FIG. 9 is a schematic diagram of another application scenario of the V2X service processing method according to the embodiment of the present invention. In the application scenario shown in FIG. 9, the source area and the target area are in the coverage area of the same access network device. For example, the source access network device and the target access network device are both the eNB.

In the application scenario shown in FIG. 9, in the target area, the terminal device uses the Uu interface to send and/or receive the V2X service. The terminal device obtains the V2X configuration information of the target area before entering the target area in a same implementation manner as the manner described in the application scenario 1. The content of the V2X configuration information is also the same as that in the application scenario 1. Therefore, details are not described herein again.

The embodiments in an application scenario 5 described as below are not part of the present invention.

In an application scenario 5, the V2X communication in the source area is performed using the Uu interface or the PCS interface, and the V2X communication in the target area is performed using the Uu interface and/or the PC5 interface.

In this application scenario, the V2X communication in the target area using the Uu interface and/or the PCS interface refers to that both the Uu interface and the PCS interface are supported in the target area. Different interfaces, such as the Uu interface or the PCS interface, may be used for different V2X services. In practical applications, a higher layer of the terminal device determines whether to use the Uu interface or the PCS interface. The eNB notifies the terminal device that both the Uu interface and the PCS interface are supported in the target area, an access stratum of the terminal device notifies the higher layer such as an application layer, the application layer determines which interface is to be used for the V2X communication and notifies the access stratum of the selected interface, the access stratum of the terminal device indicates the selected interface to the eNB, and the eNB sends corresponding V2X configuration information of the selected interface in the target area to the terminal device.

In an application scenario 6, the V2X communication in the source area is performed using the Uu interface or the PCS interface, and the V2X communication in the target area is performed using an unlicensed spectrum.

In the application scenario, no LTE frequency is deployed for the V2X service in the target area, that is, no LTE V2X cell exists in the target area. Since no LTE-V2X cell exists in the target area, the terminal device sends and/or receives the required V2X service in the target area in two manners described below. In the first manner, the terminal device obtains the pre-configuration information. The pre-configuration information of the unlicensed spectrum is saved in the UICC or the memory of the terminal device, and the terminal device may directly obtain the pre-configuration information. In the second manner, the access network device (the source eNB) performs cross-carrier scheduling. The access network device schedules a V2X resource on the unlicensed spectrum and notifies the terminal device of the scheduled V2X resource. For example, the access network device sends configuration information for the V2X communication in the target area to the user equipment through DCI and RRC signaling on the PDCCH or the EPDCCH.

In an application scenario 7, the V2X communication in the source area is performed using the unlicensed spectrum and the V2X communication in the target area is performed using the Uu interface and/or the PCS interface.

The concept of V2X communication using the Uu interface and/or the PCS interface is the same as that in the application scenario 5, and details are not described herein again. In this application scenario, the source area is not deployed with the LTE frequency for V2X services, in other words, no LTE V2X cell exists in the source area. Since the target area includes the LTE cell, the terminal device sends and/or receives the V2X service in the target area in the following manner. While sending and/or receiving the V2X service in the source area using the unlicensed spectrum, the terminal device may obtain the V2X configuration information of the target area sent by the access network device (target eNB) at the same time. At this time, the terminal device needs to have a dual receiver. If the target area supports both of the PCS interface and the Uu interface simultaneously, to reduce the latency, the terminal device may send and/or receive the V2X service using the PCS interface. If the target area only supports the Uu interface, the terminal device may send a request for obtaining a V2X sending resource to the target eNB.

FIG. 10 is a flowchart of another V2X service processing method according to an embodiment of the present invention. The V2X service processing method provided in the embodiment is applicable to the V2X communication. The method may be executed by a V2X service processing apparatus. The V2X service processing apparatus is implemented through a combination of hardware and software, and may be integrated in the processor of the access network device that performs the V2X communication, and may be invoked and used by the processor. As shown in FIG. 10, the method in the embodiment may include the steps described below.

In step S210, the access network device obtains V2X configuration information of a target area of a terminal device.

The embodiment of the present invention provides a V2X communication manner for the terminal device in a V2X system that moves in different areas. The terminal device in the V2X system is usually in the moving process, such as moving from a source area to a target area. The process that the terminal device moves from the source area to the target area is the moving process. In order to meet the continuity requirement of V2X service during area changing, the access network device can obtain V2X configuration information of the target area when the terminal device is in the source area, and the access network device may obtain the corresponding V2X configuration information according to the V2X transmission technology used in the target area.

It should be noted that the terminal device may obtain the V2X configuration information of the target area from the access network device when the V2X communication in the target area is performed using the Uu interface or the PCS interface or using the Uu interface and/or the PCS interface; and the terminal device may obtain the pre-configuration information by itself when the V2X communication in the target area is performed using the unlicensed spectrum, that is, when the target area is a non-coverage area, or when the V2X communication in the source area is performed using the unlicensed spectrum and the V2X communication in the target area is performed using the Uu interface and/or the PCS interface. In addition, the area in the various embodiments of the present invention may be a cell or a non-coverage area. The cell refers to an area covered by the access network device. The non-coverage area may refer to an area not covered by any access network device, that is, an area in which the V2X communication is performed by using the unlicensed spectrum.

In step S220, the access network device sends the V2X configuration information of the target area to the terminal device, so that the terminal device sends and/or receives a corresponding V2X service by using a licensed or unlicensed spectrum in the target area.

The access network device in the embodiment of the present invention obtains V2X configuration information of the target area for the terminal device to perform the V2X communication in the target area. Generally, when the V2X transmission technologies used in the target area are different, the contents of the obtained V2X configuration information are different. Subsequently, the access network device in the source area sends the obtained V2X configuration information of the target area to the terminal device. Therefore, the terminal device may use the licensed spectrum or the unlicensed spectrum to send and/or receive corresponding V2X services in the target area according to the content of the actually obtained V2X configuration information of the target area. In addition, the target area in the embodiment of the present invention may be a cell deployed with the LTE spectrum, that is, the terminal device may use the licensed spectrum to send and/or receive the V2X service in the target area; and the target area may also be a cell without the LTE spectrum, that is, the terminal device may use the unlicensed spectrum to send and/or receive the V2X service.

It should be noted that if the access network device obtains the V2X configuration information of the target area after the terminal device enters the target area and then sends the V2X configuration information of the target area to the terminal device to indicates the terminal device to send and/or receive the required V2X service according to the obtained V2X configuration information or pre-configuration information, the latency of the V2X service is generally more than 100 milliseconds (ms). The V2X system ensures road traffic safety and has high requirements on latency, so the latency of more than 100 ms cannot meet the low latency requirement of the V2X communication. In the V2X service processing method provided in the embodiment of the present invention, before the terminal device moves into the target area, the access network device in the source area obtains the V2X configuration information of the target area and sends the V2X configuration information to the terminal device in the source area. Therefore, when moving into the target area, the terminal device may directly use the licensed or unlicensed spectrum to send and/or receive the corresponding V2X service according to the known V2X configuration information.

It should be noted that in the embodiment of the present invention, the source area and the target area may use the same V2X transmission technology or different V2X transmission technologies. Therefore, even if the terminal device is handed over between areas with different transmission technologies, the terminal device can obtain information for the V2X communication in the target area before moving to the target area, avoiding the interruption of the V2X service, which has the same technical effect as the case where the terminal device is handed over between areas with the same transmission technology, thereby ensuring the continuity of the V2X service.

In the V2X service processing method provided in the embodiment, the access network device obtains the V2X configuration information of the target area of the terminal device and sends the obtained V2X configuration information of the target area to the terminal device, so that the terminal device can use the licensed spectrum or unlicensed spectrum to send and/or receive the corresponding V2X service in the target area according to the obtained V2X configuration information after entering the target area,. In the method provided in the embodiment, the terminal device uses the licensed spectrum or unlicensed spectrum to send and/or receive the corresponding V2X service in the target area, and the source area and the target area may use the same transmission technology or different transmission technologies. Thus, the latency of sending and/or receiving the V2X service after the terminal device moves to the target area can be greatly reduced, thereby effectively ensuring the continuity of the V2X service. The embodiment solves the problem in the existing LTE V2X communication that the V2X service has a poor continuity and is likely interrupted since the vehicle is usually in a moving process.

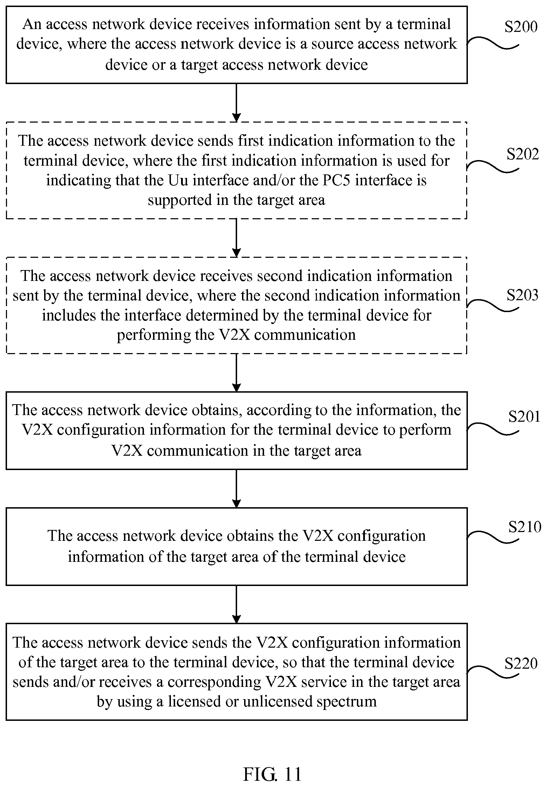

Alternatively, FIG. 11 is a flowchart of another V2X service processing method according to an embodiment of the present invention. The method may further include steps S200 and 5201 before the step S210 on the basis of the embodiment illustrated in FIG. 10.

In step S200, the access network device receives information sent by the terminal device. The access network device is a source access network device or a target access network device.

In step S201, the access network device obtains, according to the information, the V2X configuration information for the terminal device to perform V2X communication in the target area.

The information in the embodiment of the present invention includes one or more of: measurement report information, resource request information, and interest/capability indication information. The resource request information is used for requesting a Uu interface or PCS interface resource, and the interest/capability indication information is used for indicating a capability of the terminal device to receive a V2X service via the PCS interface or the Uu interface.

In practical applications, in the embodiments of the present invention, the transmission technology in the source area may include V2V communication with using the Uu interface, with using the PCS interface, with using the Uu interface and/or the PCS interface, or with using the unlicensed spectrum; and the transmission technology in the target area may include V2V communication with using the Uu interface, with using thea PCS interface, with using the Uu interface and/or the PCS interface, or with using the unlicensed spectrum.

It should be noted that the above-mentioned source access network device is the access network device to which the source area belongs, and the target access network device is the access network device to which the target area belongs. When the V2X communication in the source area is performed using the Uu interface and/or the PCS interface, the above-mentioned access network device is the source access network device. When the V2X communication in the source area is performed using the unlicensed spectrum, the above-mentioned access network device is the target access network device.

It also should be noted that the V2X communication with using the Uu interface and/or the PCS interface in the target area refers to that both the Uu interface and the PCS interface are supported in the target area. Different interfaces, such as the Uu interface or the PCS interface, may be used for different V2X services. For example, different interfaces are used for different terminal devices, or different interfaces are used for different V2X services of a same terminal device.

Further, in the embodiment of the present invention, if the V2X communication in the target area is performed using the Uu interface and/or the PCS interface, the method provided by the embodiment may further include steps S203 and 5204 after the step S200.

In step S203, the access network device sends first indication information to the terminal device. The first indication information is used for indicating that the Uu interface and/or the PCS interface are supported in the target area.

In step S204, the access network device receives second indication information sent by the terminal device. The second indication information includes which one of the interfaces is determined by the terminal device to be used for the V2X communication.

In the embodiment of the present invention, a higher layer of the terminal device determines which one of the Uu interface and the PCS interface is used. The access network device notifies the terminal device that both the Uu interface and the PCS interface are supported in the target area, an access stratum of the terminal device notifies the higher layer such as an application layer, the application layer determines which one of the interfaces is to be used for the V2X communication and notifies the access stratum of the selected interface, the access stratum of the terminal device indicates the selected interface to the access network device, and the access network device sends the V2Xconfiguration information of the selected interface in the target area to the terminal device.

Alternatively, in the embodiment of the present invention, when the V2X communication in the target area is performed using the Uu interface or when the terminal device determines to perform the V2X communication by using the Uu interface, the V2X configuration information of the target area includes one or more of: a SIB such as an SIB 13 or an SIB20, an MCCH, and an SC-MCCH. When the V2X communication in the target area is performed using the PCS interface or when the terminal device determines to perform the V2X communication by using the PCS interface, the V2X configuration information of the target area includes one or more of: synchronization information, a sending resource, and a receiving resource.

It should be noted that in the embodiment of the present invention, the source area and the target area may be in the coverage area of a same access network device, or the source area and the target area are in coverage areas of different access network devices, or the source area or the target area is not covered by any access network device.

Alternatively, in an application scenario of the embodiment of the present invention, when the source area and the target area are in the coverage area of the same access network device, that is, when the source access network device and the target access network device is the same device, the step S210 in the embodiment of the present invention may include that: the access network device obtains the V2X configuration information of the target area from the access network device itself.

Alternatively, in another application scenario of the embodiment of the present invention, when the source area and the target area are coverage areas of different access network devices, that is, when the source access network device and the target access network device are different devices, the step S210 in the embodiment of the present invention may include that: the source access network device to which the source area belongs obtains the V2X configuration information of the target area from the target access network device to which the target area belongs via the X2 interface, or obtains the V2X configuration information of the target area through operation and maintenance (OAM).

Alternatively, when the V2X communication in the source area is performed using the PCS interface and/or the Uu interface and the V2X communication in the target area is performed using the unlicensed spectrum, or when the V2X communication in the source area is performed using the unlicensed spectrum and the V2X communication in the target area is performed using the PCS interface and/or the Uu interface, the step S220 in the embodiment may include that: when the terminal device determines not to use a pre-configuration resource, the access network device sends the V2X configuration information of the target area to the terminal device. In addition, the terminal device may obtain the pre-configuration information by itself, and send and/or receive the V2X service according to the pre-configuration information. Specifically, when the V2X communication in the target area is performed using the unlicensed spectrum, the source access network device performs cross-carrier scheduling, that is, the source access network device schedules the V2X resource on the unlicensed spectrum and notifies the terminal device. The implementation manner has been described in the above embodiments, and therefore will not be described herein.

It should be noted that the method provided by the embodiment of the present invention may be applied to the MBSFN broadcast or SC-PTM broadcast transmission. The embodiment of the present invention takes the V2X service as an example for description. The method provided by the embodiment of the present invention may also be applied to other types of broadcast services, such as digital video, machine type communication (MTC), public safety (PS) communication, cluster mission critical push to talk (MCPTT), and the like.

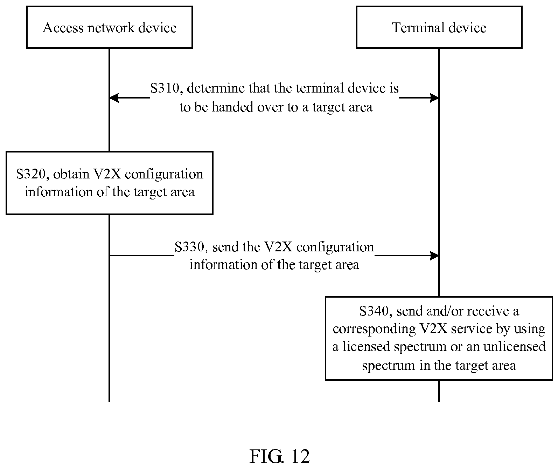

FIG. 12 is a flowchart of signaling interaction of a V2X service processing method according to an embodiment of the present invention. The V2X service processing method provided by the embodiment is applicable to the V2X communication. The method may be performed by the terminal device and the access network device in the V2X system. As shown in FIG. 12, the method in the embodiment may include the steps described below.

In step S310, the access network device determines that the terminal device is to be handed over to a target area.

In step S320, the access network device obtains V2X configuration information of the target area.

In step S330, the access network device sends the V2X configuration information of the target area to the terminal device.

In step S340, the terminal device sends and/or receives, in the target area, a corresponding V2X service by using a licensed spectrum or an unlicensed spectrum according to the V2X configuration information of the target area.

In the application scenario 1 to the application scenario 4 in the above-mentioned embodiment, the V2X service may be sent and/or received using the method provided in the embodiment illustrated in FIG. 12. Alternatively, the method may further include the following step before the step S310.

The terminal device sends information to the access network device. The content of the information has been described in detail in the above-mentioned embodiment, and will not be described herein again.

Correspondingly, in step S310, the access network device may determine, according to the network load status and/or information, whether the terminal device is to be handed over to the target area. The target area and the source area have the same frequency or different frequencies, and belong to the same public land mobile network (PLMN) or different PLMNs or belong to the same eNB or different eNBs.

In the embodiment, if the source area and the target area belong to different access network devices, the source access network device obtains the V2X configuration information of the target area from the target access network device via the X2 interface, or obtains the V2X configuration information of the target area through OAM. The access network device in the embodiment may send the V2X configuration information to the terminal device through RRC signaling. Specifically, the access network device in the source area sends the V2X configuration information to the terminal device before the terminal device moves to the target area.

Alternatively, when the method provided in the embodiment illustrated in FIG. 12 is applied to the application scenario 1 and the application scenario 4, since the V2X communication in the target area is performed using the Uu interface, the obtained V2X configuration information may include one or more of: an SIB 13, an SIB20, an MCCH, an SC-MCCH, and may further include a V2X frequency. In these application scenarios, the terminal device may send and/or receive required V2X services according to the received V2X configuration information. The terminal device sends request information to the access network device to request the access network device to send the V2X service resource, the access network device allocates the V2X sending resource to the terminal device, and the terminal device sends the V2X service on the sending resource. In addition, in order to reduce the sending latency, the access network device may configure reserved resources for the handover, and sends the reserved resources to the terminal device in the source area through broadcast or through RRC signaling, so that the terminal device may send the V2X service by randomly selecting the sending resource from the reserved resources or by using the sending resource indicated by the RRC signaling.

Alternatively, when the method provided in the embodiment illustrated in FIG. 12 is applied to the application scenario 2 and the application scenario 3, since the V2X communication in the target area is performed using the PCS interface, the obtained V2X configuration information may include one or more of: synchronization information, a sending resource, and a receiving resource. In these application scenarios, the terminal device may perform the V2X communication by using a resource scheduled by the access network device or a resource selected by the terminal device. In the case of using the scheduled resource, the source access network device to which the source area belongs indicates the resource configuration of the target area. In the case of the self-selected resource, the terminal device randomly selects a sending resource in the resource pool indicated by the source access network device, or selects by sensing the sending resource in the resource pool. In order to ensure the latency of the V2X communication, the sensing time is at least less than the latency required by the V2X service.

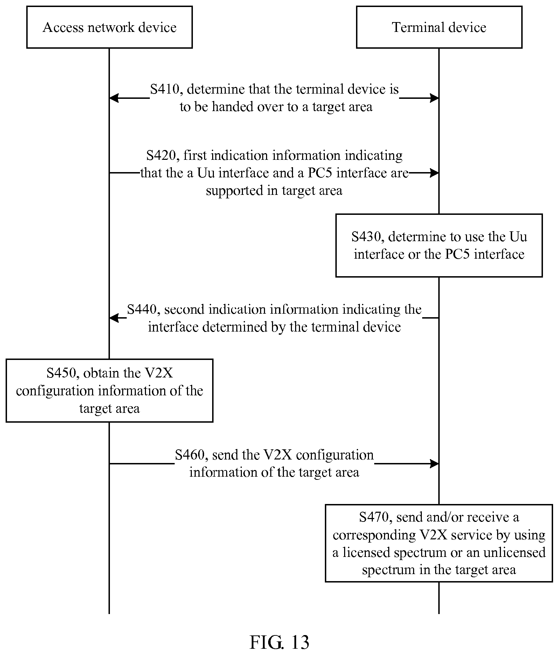

FIG. 13 is a flowchart of signaling interaction of another V2X service processing method according to an embodiment of the present invention. The V2X service processing method provided by the embodiment is applicable to the V2X communication. The method may be performed by the terminal device and the access network device in the V2X system. The method of the embodiment is applicable to the above application scenario 5. As shown in FIG. 5, the method in the embodiment may include the steps described below.

In step S410, the access network device determines that the terminal device is to be handed over to a target area.

In step S420, the access network device sends first indication information to the terminal device. The first indication information is used for indicating that the Uu interface and the PCS interface are both supported in the target area.

In the embodiment, the access network device may indicate to the terminal device through RRC signaling that both the PCS interface and the Uu interface are supported in the target area. For example, a 2-bit indication may be used. "00" indicates that both the PCS interface and the Uu interface are supported, "01" indicates that the Uu interface is supported, "10" indicates that the PCS interface is supported, and "11" indicates reservation. Alternatively, a 1-bit indication is used. For example, "0" indicates that the Uu interface and the PC5 interface are not supported at the same time, and "1" indicates that the Uu interface and the PCS interface are both supported. In addition, the bit combination of the indication information may also be flexibly designed as needed.

In step S430, the terminal device determines which one of the Uu interface and the PCS interface is used for the V2X communication.

In step S440, the terminal device sends second indication information to the access network device. The second indication information includes the interface determined by the terminal device for the V2X communication.

In the embodiment, the higher layer of the terminal device determines to select the Uu interface and/or the PCS interface. After determination, the higher layer notifies the access stratum (AS), and the terminal device indicates to the access network device which interface is selected. For example, the selected interface is indicated through RRC signaling or MAC signaling.

In step S450, the access network device obtains the target area's V2X configuration information corresponding to the interface determined by the terminal device.

In the embodiment, the access network device obtains the required V2X configuration information according to the second indication information from the terminal device. For example, the terminal device indicates the PCS interface is preferred, and the access network device obtains the V2X configuration information corresponding to the PCS interface of the target area.

In step S460, the access network device sends the V2X configuration information of the target area to the terminal device.

In step S470, the terminal device sends and/or receives, in the target area, a corresponding V2X service by using a licensed spectrum or an unlicensed spectrum according to the V2X configuration information of the target area.

Alternatively, the method may further include the following step before the step S410.

The terminal device sends information to the access network device. The content of the information has been described in detail in the above-mentioned embodiment, and will not be described herein again.

Correspondingly, in step S410, the access network device may determine, according to the network load status and/or information, whether the terminal device is to be handed over to the target area. The target area and the source area have the same frequency or have different frequencies. The target area and the source area belong to the same public land mobile networks (PLMN) or different PLMNs. Alternatively, the target area and the source area belong to the same eNB or different eNBs.

In the embodiment, if the source area and the target area are coverage areas of different access network devices, the source access network device obtains the V2X configuration information of the target area from the target access network device via the X2 interface, or obtains the V2X configuration information of the target area through OAM.

It should be noted that in the embodiment, the content of the V2X configuration information of the target area obtained by the access network device is related to the type of the interface that the terminal device determines to use. If it is determined that the Uu interface is used for the V2X communication, the obtained V2X configuration information may include one or more of: an SIB 13, an SIB20, an MCCH, an SC-MCCH, and may also include a V2X frequency. If it is determined that the PCS interface is used for the V2X communication, the obtained V2X configuration information may include one or more of: synchronization information, a sending resource, and a receiving resource. In addition, the manner the terminal device sends and/or receives the V2X service is related to the determined LTE transmission technology. The specific manners of sending and/or receiving the V2X service for various V2X transmission technologies of the target area are described in detail in the above embodiments, and will not be repeated herein.

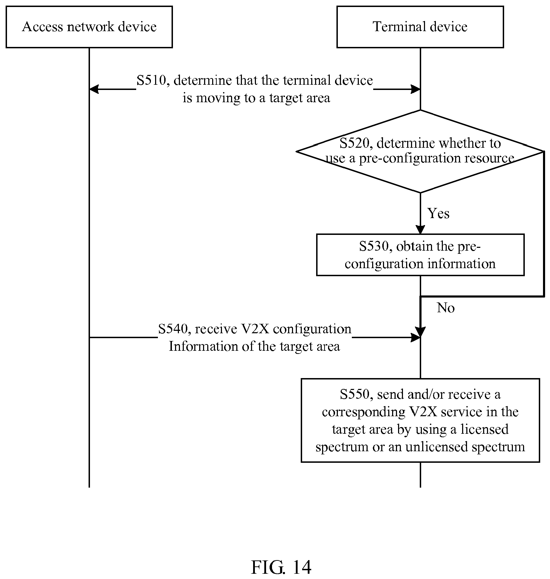

FIG. 14 is a flowchart of signaling interaction of another V2X service processing method according to an embodiment of the present invention. The V2X service processing method provided by the embodiment is applicable to the V2X communication. The method may be performed by the terminal device and the access network device in the V2X system. The method of the embodiment is applicable to the above application scenario 6. As shown in FIG. 14, the method in the embodiment may include the steps described below.

In step S510, the access network device determines that the terminal device is to move into a non-coverage area.

The no-coverage area in the embodiment means that: the area is not covered by any LTE V2X service of the licensed spectrum, or the area does not include the cell capable of providing an LTE V2X service. The V2X communication in the no-coverage area is performed by using the unlicensed spectrum, such as the 5.9 GHz spectrum.

In practical applications, before the terminal device enters a certain area, if the terminal device does not detect related information of this cell, such as a synchronization signal, a system message, and the like, it may be determined that the terminal device is to move to a non-coverage area. In the non-coverage area, the terminal device can only perform the V2X communication by using the PCS interface, and cannot perform the communication by using the Uu interface.

In step S520, the terminal device determines whether to use a pre-configuration resource. If the terminal device determines to use the pre-configuration resource, the method proceeds to a step S530. If the terminal device determines to no use the pre-configuration resource, the method proceeds to a step S540.

In the embodiment, the terminal device may determine whether to use the pre-configuration resource according to the indication information of the access network device. The access network device may send the indication information in the serving cell of the terminal device, or send indication in the cell not capable of providing the V2X service. If the access network device does not provide the indication information, the terminal device performs the V2X communication by using the pre-configuration resource. If the access network device indicates the terminal device to perform the V2X communication by using a cross-carrier scheduled resource, the terminal device performs the V2X communication according to the cross-carrier scheduling information.

In step S530, the terminal device obtains the pre-configuration information.

The pre-configuration information in the embodiment includes one or more of: synchronization information, a sending resource, a receiving resource. In the case where the terminal device randomly selects the sending resource, to reduce the conflict, the terminal device may select the resource according to the area in which the terminal device is located or select the resource by sensing.

In step S540, the terminal device receives V2X configuration information of the target area sent by the access network device.

In the embodiment, the access network device may use cross-carrier scheduling, that is, the index of the carrier is indicated through RRC signaling, and the corresponding scheduling information of the carrier is indicated through DCI.

In step S550, the terminal device sends and/or receives, in the target area, a corresponding V2X service by using a licensed spectrum or an unlicensed spectrum according to the V2X configuration information or pre-configuration information of the target area.

The terminal device in the embodiment sends and/or receives the V2X service on the unlicensed spectrum according to the cross-carrier scheduling information or the pre-configuration information sent by the access network device.

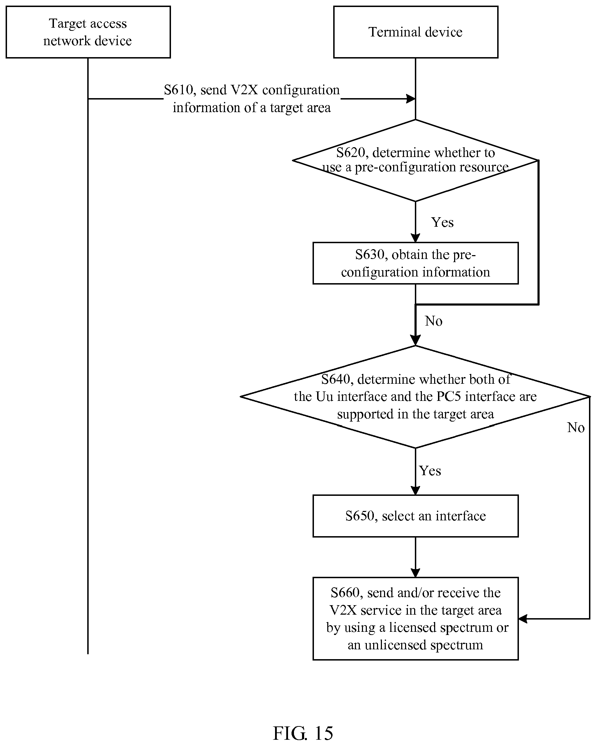

FIG. 15 is a flowchart of signaling interaction of another V2X service processing method according to an embodiment of the present invention. The V2X service processing method provided by the embodiment is applicable to the V2X communication. The method may be performed by the terminal device and the access network device in the V2X system. The method of the embodiment is applicable the above application scenario 7. The access network device that interacts with the terminal device in the embodiment is a target access network device. As shown in FIG. 15, the method in the embodiment may include the steps described below.

In step S610, the target access network device sends V2X configuration information of a target area to the terminal device.

In the embodiment, the terminal device determines the target area through a cell reselection/selection process, and receives configuration information of the target area. The terminal device is still performing V2X communication in the non-coverage area. If the terminal device is provided with a dual receiver, the terminal device can simultaneously receive the V2X service of the non-coverage area and the V2X configuration information of the target area. If the terminal device is provided with a single receiver, the terminal device can only receive the V2X configuration information of the target area in a time division manner, that is, the V2X configuration information of the target area is received in the interval of the V2X service reception in the non-coverage area.

In step S620, the terminal device determines whether to use the pre-configuration resource. If the terminal device determines to use the pre-configuration resource, the method proceeds to a step S630. If the terminal device determines to not use the pre-configuration resource, the method proceeds to a step S640.

In step S630, the terminal device obtains the pre-configuration information. The pre-configuration information includes one or more of: synchronization information, a sending resource, a receiving resource, an SIB, an MCCH, and an SC-MCCH.

In step S640, the terminal device determines whether the Uu interface and the PCS interface are both supported in the target area. If terminal device determines that the Uu interface and the PCS interface are both supported, the method proceeds to a step S650. If the terminal device determines that the Uu interface and the PCS interface are not supported at the same time, the method proceeds to a step S660.

The terminal device determines whether to use the pre-configuration resource according to the received V2X configuration information. Generally, when the V2X communication in the target area is performed by using the PCS interface, the terminal device may send and/or receive the V2X service through the pre-configuration information. When the terminal device determines not to use the pre-configuration resource, the terminal device further determines whether both of the PCS interface and the Uu interface are supported. If the configuration information of the PCS interface and the configuration information of the Uu interface simultaneously exist, or the access network device of the target area supports both of the PCS interface and the Uu interface, the terminal device determines that both of the PCS interface and the Uu interface are supported. Otherwise, only one of the PCS interface and the Uu interface is supported.

In step S650, the terminal device selects an interface for performing the V2X communication, that is, selects one of the PCS interface and the Uu interface. Then the method proceeds to the step S660.

In step S660, in the target area, the terminal device sends and/or receives the V2X service by using a licensed spectrum or an unlicensed spectrum according to the interface supported by the target area or the interface selected by the terminal device.

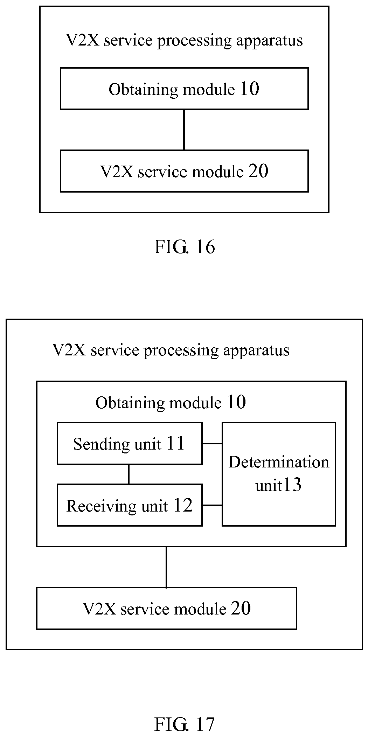

FIG. 16 is a structural diagram of a V2X service processing device according to an embodiment of the present invention. The V2X service processing apparatus in the embodiment is applicable to the V2X communication. The V2X service processing apparatus is implemented through a combination of hardware and software, and may be integrated in the terminal device that performs the V2X communication, and may be invoked and used by the processor. As shown in FIG. 16, the V2X service processing apparatus in the embodiment may include: an obtaining module 10 and a V2X service module 20.

The obtaining module 10 is configured to obtain pre-configuration information or V2X configuration information of a target area.

The embodiment of the present invention provides a V2X communication manner for the terminal device in a V2X system moving in different areas. From the source area to the target area, the terminal is in a moving process. In order to meet the continuity requirement of V2X service after area changing, the obtaining module 10 in the terminal device may obtain the pre-configuration information or V2X configuration information of the target area when the terminal device is in the source area. Generally, the terminal device obtains the V2X configuration information of the target area when the V2X communication in the target area is performed using a Uu interface or a PCS interface or using the Uu interface and/or the PCS interface, while the terminal device obtains the pre-configuration information when the V2X communication in the target area is performed using the unlicensed spectrum, that is, when the target area is a non-coverage area, or when the V2X communication in the source area is performed using the unlicensed spectrum and the V2X communication in the target area is performed using the Uu interface and/or the PCS interface.

It should be noted that the area in the various embodiments of the present invention may be a cell or a non-coverage area. In addition, the terminal device in the embodiment of the present invention may perform the V2X communication in the area covered by the access network device in a RRC connection mode.

The V2X service module 20 is configured to send and/or receive, in the target area, a corresponding V2X service in the target area by using a licensed spectrum or an unlicensed spectrum according to the pre-configuration information or V2X configuration information of the target area obtained by the obtaining module 10.

The V2X service processing apparatus in the embodiment of the present invention obtains the pre-configuration information or the V2X configuration information of the target area for performing the V2X communication in the target area. Generally, when different V2X transmission technologies are used in the target area, the contents of the V2X configuration information or pre-configuration information obtained by the obtaining module 10 are different. Therefore, the V2X service module 20 may send and/or receive a corresponding V2X service in the target area according to the content of the actually obtained pre-configuration information or V2X configuration information of the target area. In addition, the target area in the embodiment of the present invention may be a cell with an LTE spectrum, that is, the V2X service module 20 may use a licensed spectrum to send and/or receive a V2X service; and the target area may also be a cell without the LTE spectrum, that is, the V2X service module 20 may use an unlicensed spectrum to send and/or receive a V2X service.

It should be understood that, if the terminal device obtains the pre-configuration information or the V2X configuration information of the target area when being in the target area, and then sends and/or receives a V2X service according to the obtained V2X configuration information or pre-configuration information, the V2X service latency is generally more than 100 ms. The V2X system is used for ensuring road traffic safety and has high requirements on latency, so the latency of more than 100 ms cannot meet the low latency requirement of the V2X communication. In the V2X service processing apparatus provided by the embodiment of the present invention, the obtaining module 10 when being in in the source area obtains information for performing the V2X communication in the target area before the terminal device moves to the target area. Therefore, after the terminal device enters the target area, the V2X service module 20 can directly use the licensed or unlicensed spectrum to send and/or receive a corresponding service according to the obtained V2X configuration information or pre-configuration information.

It should be noted that in the embodiments of the present invention, the source area and the target area may use the same V2X transmission technology or may use different V2X transmission technologies. Therefore, even if the terminal device moves between areas with different transmission technologies, the terminal device can also obtain information for performing V2X communication in the target area before moving to the target area, avoiding interruption of the V2X service, which has the same technical effect as when the terminal device moves between areas with the same transmission technology, thereby ensuring the continuity of the V2X service.

The V2X service processing apparatus provided by the embodiment of the present invention is used for executing the V2X service processing method provided by the embodiment illustrated in FIG. 3 and has corresponding functional modules and thus has the similar implementation principle and technical effects, which will not be repeated here.

Alternatively, FIG. 17 is a structural diagram of another V2X service processing apparatus according to an embodiment of the present invention. On the basis of the structure of the V2X service processing apparatus shown in FIG. 16, the obtaining module 10 in the present embodiment may include: a sending unit 11 and a receiving unit 12.

The sending unit 11 is configured to send information to an access network device so that the access network device obtains the V2X configuration information for the terminal device to perform V2X communication in the target area. The access network device is a source access network device or a target access network device.

The information in the embodiment of the present invention includes one or more of: measurement report information, resource request information, and interest/capability indication information. The resource request information is used for requesting a Uu interface resource or a PCS interface resource, and the interest/capability indication information is used for indicating a capability of the terminal device to receive a V2X service via a PCS interface or a Uu interface.

The receiving unit 12 is configured to receive the V2X configuration information of the target area sent by the access network device.

In practical applications, the transmission technology in the source area in the embodiment of the present invention may include V2V communication by using a Uu interface, V2V communication by using a PCS interface, V2V communication by using a Uu interface and/or a PCS interface, or V2V communication by using an unlicensed spectrum; and the transmission technology in the target area may include V2V communication by using a Uu interface, V2V communication by using a PCS interface, V2V communication by using a Uu interface and/or a PCS interface, or V2V communication by using an unlicensed spectrum.

It should be noted that the above-mentioned source access network device is the access network device to which the source area belongs, and the target access network device is the access network device to which the target area belongs. When the V2X communication in the source area is performed using the Uu interface and/or the PCS interface, the above-mentioned access network device is the source access network device. When the V2X communication in the source area is performed using the unlicensed spectrum, the above-mentioned access network device is the target access network device.

It also should be noted that the V2X communication using the Uu interface and/or the PCS interface in the target area refers to that both of the Uu interface and the PCS interface are supported in the target area. Different interfaces, such as the Uu interface or the PCS interface, may be used for different V2X services. For example, different interfaces are used for different terminal devices, or different interfaces are used for different V2X services of a same terminal device.

Further, in the embodiment of the present invention, if the V2X communication in the target area is performed using the Uu interface and/or the PCS interface, the receiving unit 12 in the apparatus provided in the embodiment is further configured to receive first indication information sent by the access network device before receiving the V2X configuration information of the target area sent by the access network device. The first indication information is used for indicating that the Uu interface and/or the PCS interface are supported in the target area.

The obtaining module 10 in the embodiment may further include a determination unit 13.

The determination unit 13 is configured to determine which one of the Uu interface and the PCS interface is to be used for the V2X communication. The implementation manner of determining to use which one of the Uu interface and the PCS interface is described in detail in the above-mentioned embodiments, and thus is not described herein.

The sending unit 11 is further configured to send second indication information to the access network device. The second indication information includes the interface determined by the terminal device for performing the V2X communication.

Alternatively, in the embodiment of the present invention, when the V2X communication in the target area is performed using the Uu interface or when the terminal device determines to use the Uu interface for performing the V2X communication, the V2X configuration information of the target area includes one or more of: a SIB such as an SIB 13 or an SIB20, an MCCH, and an SC-MCCH, and may further include a V2X frequency. When the V2X communication in the target area is performed using the PCS interface or when the terminal device determines to use the PCS interface for performing the V2X communication, the V2X configuration information of the target area includes one or more of: synchronization information, a sending resource, and a receiving resource.

It should be noted that in the embodiment of the present invention, the source area and the target area may be in the coverage area of a same access network device, or the source area and the target area are coverage areas of different access network devices, or the source area or the target area is not covered by any access network device.

The V2X service processing apparatus provided by the embodiment of the present invention is used for executing the V2X service processing method provided by the embodiment illustrated in FIG. 4 and has corresponding functional modules, and thus has similar implementation principle and technical effects, which will not be repeated here.

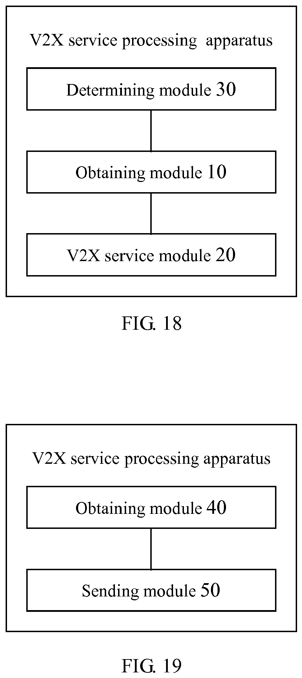

Alternatively, FIG. 18 is a structural diagram of another V2X service processing apparatus according to an embodiment of the present invention. On the basis of the structure of the apparatus shown in FIG. 16, when the V2X communication in the source area is performed using the PCS interface and/or the Uu interface and the V2X communication in the target area is performed using the unlicensed spectrum, or when the V2X communication in the source area is performed using the unlicensed spectrum and the V2X communication in the target area is performed using the PCS interface and/or the Uu interface, the apparatus in the embodiment may further include a determining module 30.

The determining module 30 is configured to determine whether to use a pre-configuration resource for performing the V2X communication before the obtaining module 10 obtains the pre-configuration information.

In the embodiment, the process that the obtaining module 10 obtains the pre-configuration information or the V2X configuration information of the target area may include steps described below.

When the determining module 30 determines to use the pre-configuration resource for performing the V2X communication, the determining module 30 obtains the pre-configuration information. The pre-configuration information includes one or more of: synchronization information, a sending resource, a receiving resource, an SIB, an MCCH, and an SC-MCCH.

When the determining module 30 determines not to use the pre-configuration resource for performing the V2X communication, the determining module 30 receives the V2X configuration information of the target area sent by the access network device.

In the embodiment, the V2X service processing apparatus sends and/or receives the required V2X service in the target area in the following two manners: obtaining the pre-configuration information, or cross-carrier scheduling by the source access network device. The two manners have been described in detail in the above embodiments, and therefore are not described herein again.

The V2X service processing apparatus provided by the embodiment of the present invention is used for executing the V2X service processing method provided by the embodiment illustrated in FIG. 5 and has corresponding functional modules, and thus has the similar implementation principle and technical effects, which will not be repeated here.

In practical applications, the sending unit 11 and the receiving unit 12 in the obtaining module 10 and the V2X service module 20 in the various embodiments illustrated in FIG. 16 and FIG. 18 may be implemented by a transceiver of the terminal device. The determination unit 13 in the obtaining module 10 and the determining module 30 may be implemented by the processor of the terminal device. The processor may be, for example, a central processing unit (CPU), or an application specific integrated circuit (ASIC), or one or more integrated circuits used for implementing the embodiments of the present invention.

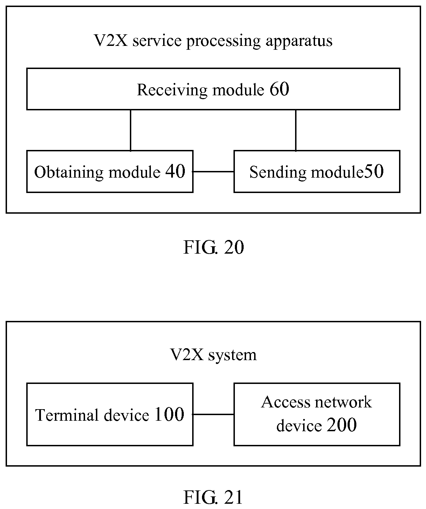

The V2X service processing apparatus according to an embodiment shown in FIGS. 19 AND 20 are not part of the present invention.

FIG. 19 is a structural diagram of another V2X service processing apparatus according to an embodiment of the present invention. The V2X service processing apparatus provided in the embodiment is applicable to the V2X communication. The V2X service processing apparatus is implemented through a combination of hardware and software, and may be integrated in a processor of the access network device that performs the V2X communication, and nay be invoked and used by the processor. As shown in FIG. 19, the V2X service processing apparatus in the embodiment may include: an obtaining module 40 and a sending module 50.

The obtaining module 40 is configured to obtain V2X configuration information of a target area of a terminal device.

The embodiment of the present invention provides a V2X communication manner for the terminal device in a V2X system moving in different areas. The terminal device in the V2X system is usually in the moving process, such as moving from a source area to a target area. The terminal device is in the moving process from the source area to the target area. In order to meet the continuity requirement of V2X service after area changing, the obtaining module 40 obtains V2X configuration information of the target area when the terminal device is in the source area, and the obtaining module 40 may obtain the corresponding V2X configuration information according to the V2X transmission technology used in the target area.

It should be noted that the obtaining module 40 may obtain the V2X configuration information of the target area when the V2X communication in the target area is performed using a Uu interface or a PCS interface or using the Uu interface and/or the PCS interface; and the terminal device may obtain the pre-configuration information by itself when the V2X communication in the target area is performed using the unlicensed spectrum, that is, when the target area is a non-coverage area, or when the V2X communication in the source area is performed using the unlicensed spectrum and the V2X communication in the target area is performed using the Uu interface and/or the PCS interface. In addition, the area in the various embodiments of the present invention may be a cell or a non-coverage area. The cell may refer to an area covered by the access network device. The non-coverage area may refer to an area not covered by any access network device, that is, an area in which the V2X communication is performed by using the unlicensed spectrum.

The sending module 50 is configured to send the V2X configuration information of the target area obtained by the obtaining module 40 to the terminal device, so that the terminal device sends and/or receives a corresponding V2X service in the target area by using a licensed or unlicensed spectrum.

The access network device in the embodiment of the present invention obtains V2X configuration information of the target area for the terminal device to perform the V2X communication in the target area. Generally, when different V2X transmission technologies are used in the target area, the contents of the V2X configuration information obtained by the obtaining module 40 are different. Subsequently, the sending module 50 sends in the source area the obtained V2X configuration information of the target area to the terminal device. Therefore, the terminal device may send and/or receive a corresponding V2X service in the target area according to the content of the actually obtained V2X configuration information of the target area. In addition, the target area in the embodiment of the present invention may be a cell with an LTE spectrum, that is, the terminal device may use the licensed spectrum to send and/or receive a V2X service in the target area; and the target area may also be a cell without the LTE spectrum, that is, the terminal device may use the unlicensed spectrum to send and/or receive a V2X service.

The V2X service processing apparatus provided by the embodiment of the present invention is used for executing the V2X service processing method provided by the embodiment illustrated in FIG. 10 and has corresponding functional modules, and thus has the similar implementation principle and technical effect, which will not be repeated here.

Alternatively, FIG. 20 is a structural diagram of another V2X service processing apparatus according to an embodiment of the present invention. On the basis of the structure of the apparatus shown in FIG. 19, the apparatus provided in the present embodiment may further include a receiving module 60.

The receiving module 60 is configured to receive information sent by the terminal device before the obtaining module 40 obtains the V2X configuration information of the target area of the terminal device. The access network device is a source access network device or a target access network device.

In the embodiment, the step in which the obtaining module 40 obtains the V2X configuration information of the target area of the terminal device includes that: according to the information received by the receiving module 60, the obtaining module 40 obtains the V2X configuration information for the terminal device to perform the V2X communication in the target area.

The information in the embodiment of the present invention includes one or more of: measurement report information, resource request information, and interest/capability indication information. The resource request information is used for requesting a Uu interface or PCS interface resource, and the interest/capability indication information is used for indicating a capability of the terminal device to receive a V2X service via a PCS interface or a Uu interface.

In practical applications, the transmission technology in the source area in the embodiment of the present invention may include V2V communication by using a Uu interface, V2V communication by using a PCS interface, V2V communication by using a Uu interface and/or a PCS interface, or V2V communication by using an unlicensed spectrum; and the transmission technology in the target area may include V2V communication by using a Uu interface, V2V communication by using a PCS interface, V2V communication by using a Uu interface and/or a PCS interface, or V2V communication by using an unlicensed spectrum.

It should be noted that the above-mentioned source access network device is the access network device to which the source area belongs, and the target access network device is the access network device to which the target area belongs. When the V2X communication in the source area is performed using the Uu interface and/or the PCS interface, the above-mentioned access network device is the source access network device. When the V2X communication in the source area is performed using the unlicensed spectrum, the above-mentioned access network device is the target access network device.

It also should be noted that the V2X communication performed using the Uu interface and/or the PCS interface in the target area refers to that the Uu interface and the PCS interface are both supported in the target area. Different interfaces, such as the Uu interface or the PCS interface, may be used for different V2X services. For example, different interfaces are used for different terminal devices, or different interfaces are used for different V2X services of a same terminal device.

Further, in the embodiment of the present invention, if the V2X communication in the target area is performed using the Uu interface and/or the PCS interface, the sending module 50 in the apparatus of the embodiment is further configured to send the first indication information to the terminal device after the receiving module 60 receives the information sent by the terminal device. The first indication information is used for indicating that the Uu interface and/or the PCS interface are supported in the target area.

The receiving module 60 is further configured to receive second indication information sent by the terminal device. The second indication information includes the interface determined by the terminal device for performing the V2X communication.

Alternatively, in the embodiment of the present invention, when the V2X communication in the target area is performed using the Uu interface or when the terminal device determines to use the Uu interface for performing the V2X communication, the V2X configuration information of the target area includes one or more of: a SIB such as an SIB13 or an SIB20, an MCCH, and an SC-MCCH; and when the V2X communication in the target area is performed using the PCS interface or when the terminal device determines to use the PCS interface for performing the V2X communication, the V2X configuration information of the target area includes one or more of: synchronization information, a sending resource, and a receiving resource.

It should be noted that in the embodiment of the present invention, the source area and the target area may be in the coverage area of a same access network device, or the source area and the target area are in coverage areas of different access network devices, or the source area or the target area is not covered by any access network device.

Alternatively, in an application scenario of the embodiment of the present invention, when the source area and the target area are in the coverage area of the same access network device, that is, when the source access network device and the target access network device are the same device, the obtaining module 40 obtains the V2X configuration information of the target area in the following manner: the obtaining module 40 obtains the V2X configuration information of the target area from the access network device itself.

Alternatively, in another application scenario of the embodiment of the present invention, when the source area and the target area are coverage areas of different access network devices. the obtaining module 40 obtains the V2X configuration information of the target area in the following manner: the obtaining module 40 obtains via the X2 interface the V2X configuration information of the target area from the target access network device to which the target area belongs, or the obtaining module 40 obtains the V2X configuration information of the target area through OAM.

Alternatively, when the V2X communication in the source area is performed using the PCS interface and/or the Uu interface and the V2X communication in the target area is performed using the unlicensed spectrum, or when the V2X communication in the source area is performed using the unlicensed spectrum and the V2X communication in the target area is performed using the PCS interface and/or the Uu interface, the sending module 50 in the apparatus provided in the embodiment sends the V2X configuration information of the target area to the terminal device in the source area in the following manner: when the terminal device determines not to use a pre-configuration resource, the sending module 50 sends the V2X configuration information of the target area to the terminal device.

The V2X service processing apparatus provided by the embodiment of the present invention is used for executing the V2X service processing method provided by the embodiment illustrated in FIG. 11 and has corresponding functional modules, and thus has the similar implementation principle and technical effects, which will not be repeated here.

In practical applications, the sending module 50 and the receiving module 60 in the various embodiments illustrated from FIG. 19 to FIG. 20 may be implemented by the transceiver of the access network device. The obtaining module 40 may be implemented by the processor of the access network device. The processor may be, for example, a CPU, or an ASIC, or one or more integrated circuits used for implementing the embodiments of the present invention.

It should be noted that the apparatus provided by the embodiment of the present invention may be applied to the MBSFN broadcast or SC-PTM broadcast transmission. The embodiments of the present invention are described by taking the V2X service as an example. The apparatus provided by the embodiment of the present invention may also be applied to other types of broadcast services, such as digital video, MTC, PS communication, cluster MCPTT, and the like.

The embodiment according to FIG. 21 and described as below is not part of the present invention.

FIG. 21 is a structural diagram of a V2X system according to an embodiment of the present invention. The V2X system includes a terminal device 100 and an access network device 200. In the embodiment, the terminal device 100 is provided with the V2X service processing apparatus in any one of the above-mentioned embodiments illustrated from FIG. 16 to FIG. 18, and the access network device 200 is provided with the V2X service processing apparatus in any one of the above-mentioned embodiments illustrated in FIG. 19 and FIG. 20. The terminal device 100 in the embodiment may receive the V2X service configuration information and the V2X service sent by the access network device through the air interface, and receive the transmission manner information sent by the higher layer. The terminal device 100 may also determine the sending and/or receiving manner of the V2X service, and select a radio resource for the PC5 interface in the non-coverage area. The terminal device 100 may also send measurement report information and the sending and/or receiving manner preferred by the terminal device 100 to the access network device. The access network device 200 is responsible for receiving V2X configuration information sent by other access network devices or OAMs, is also responsible for sending and/or receiving the V2X service via the Uu interface, is also responsible for scheduling the V2X service, is also responsible for scheduling the V2X service in a across carriers manner, is also responsible for sending V2X configuration information and the V2X service to the terminal device 100, and is also responsible for sending V2X configuration information to other access network devices.

Although the embodiments disclosed by the present invention are as described above, the content thereof is merely embodiments for facilitating the understanding of the present invention and is not intended to limit the present invention. Any person skilled in the art to which the present invention pertains may make any modifications and changes in the forms and details of the implementation without departing from the present invention, but the patent protection scope of the present invention is still subject to the scope defined by the appended claims.

## Claims

1. A vehicle-to-everything, V2X, service processing method, comprising:
obtaining (S110), by a terminal device, pre-configuration information saved in the terminal device or V2X configuration information of a target area; and
sending and/or receiving (S120), by the terminal device, in the target area, a corresponding V2X service by using a licensed spectrum or an unlicensed spectrum according to the pre-configuration information saved in the terminal device or V2X configuration information of the target area;
wherein in response to V2X communication in a source area being performed using a PCS interface and/or a Uu interface and the V2X communication in the target area being performed using the unlicensed spectrum, or in response to the V2X communication in the source area being performed using the unlicensed spectrum and the V2X communication in the target area being performed using the PCS interface and/or the Uu interface, before obtaining, by the terminal device, the pre-configuration information in the terminal device, the method further comprises:
determining (S100), by the terminal device, whether to use a pre-configuration resource for the V2X communication; and
wherein the obtaining (S110), by the terminal device, the pre-configuration information saved in the terminal device or V2X configuration information of the target area comprises:
in response to the terminal device determining to use the pre-configuration resource for performing the V2X communication, obtaining (S116) the pre-configuration information saved in the terminal device, wherein the pre-configuration information saved in the terminal device comprises one or more of: synchronization information, a sending resource, a receiving resource, a SIB, a MCCH, and a SC-MCCH; and
in response to the terminal device determining not to use the pre-configuration resource for performing the V2X communication, receiving (S117), the V2X configuration information of the target area sent by the access network device.

2. The V2X service processing method of claim 1, wherein obtaining, by the terminal device, the V2X configuration information of the target area comprises:
sending (S111), by the terminal device, information to an access network device so that the access network device obtains the V2X configuration information for the terminal device to perform the V2X communication in the target area, wherein the access network device is a source access network device or a target access network device; and
receiving (S112), by the terminal device, the V2X configuration information of the target area sent by the access network device,
wherein the information comprises one or more of: measurement report information, resource request information, and interest/capability indication information, wherein the resource request information is used for requesting a Uu interface resource or a PCS interface resource, and the interest/capability indication information is used for indicating a capability of the terminal device to receive a V2X service via the PCS interface or the Uu interface.

3. The V2X service processing method of claim 2, wherein when the V2X communication in the target area is performed using the Uu interface and/or the PCS interface, before the receiving, by the terminal device, the V2X configuration information of the target area sent by the access network device, the method further comprises:
receiving (S 113), by the terminal device, first indication information sent by the access network device, wherein the first indication information is used for indicating that the Uu interface and/or the PCS interface are supported in the target area;
determining (S114), by the terminal device, to use the Uu interface or the PCS interface for the V2X communication; and
sending (S1 15), by the terminal device, second indication information to the access network device, wherein the second indication information comprises the interface determined by the terminal device for the V2X communication.

4. The V2X service processing method of any one of claims 1 to 3, wherein in response to the V2X communication in the target area being performed using the Uu interface or in response to the terminal device determining to use the Uu interface for the V2X communication, the V2X configuration information of the target area comprises one or more of: a system information block, SIB, a multicast control channel, MCCH, and a single cell-multicast control channel, SC-MCCH; and
wherein in response to the V2X communication in the target area being performed using the PCS interface or in response to the terminal device determining to use the PCS interface for the V2X communication, the V2X configuration information of the target area comprises one or more of: synchronization information, a sending resource, and a receiving resource.

5. The V2X service processing method of claim 2 or 3, wherein the terminal device is a user equipment, and the access network device is a base station.

6. A vehicle-to-everything, V2X, service processing method, comprising:
obtaining (S210), by an access network device, V2X configuration information of a target area of a terminal device; and
sending (S220), by the access network device, the V2X configuration information of the target area to the terminal device, so that the terminal device sends and/or receives a corresponding V2X service by using a licensed or unlicensed spectrum in the target area;
wherein in response to V2X communication in a source area being performed using a PCS interface and/or a Uu interface and the V2X communication in the target area is performed using the unlicensed spectrum, or in response to the V2X communication in the source area being performed using the unlicensed spectrum and the V2X communication in the target area is performed using the PCS interface and/or the Uu interface, the sending, by the access network device, the V2X configuration information of the target area to the terminal device comprises:
in response to the terminal device determining not to use a pre-configuration resource due to receiving indication from the access network device for performing the V2X communication by using a cross-carrier scheduled resource, sending, by the access network device, the V2X configuration information of the target area to the terminal device.

7. The V2X service processing method of claim 6, wherein before the obtaining, by the access network device, the V2X configuration information of the target area of the terminal device, the method further comprises:
receiving (S200), by the access network device, information sent by the terminal device, wherein the access network device is a source access network device or a target access network device; and
obtaining (S201), by the access network device and according to the information, the V2X configuration information for the terminal device to perform the V2X communication in the target area,
wherein the information comprises one or more of: measurement report information, resource request information, and interest/capability indication information, wherein the resource request information is used for requesting a Uu interface resource or a PCS interface resource, and the interest/capability indication information is used for indicating a capability of the terminal device to receive a V2X service via the PCS interface or the Uu interface.

8. The V2X service processing method of claim 7, wherein when the V2X communication in the target area is performed using the Uu interface and/or the PC5 interface, after the receiving, by the access network device, the information sent by the terminal device, the method further comprises:
sending (S202), by the access network device, first indication information to the terminal device, wherein the first indication information is used for indicating that the Uu interface and/or the PCS interface are supported in the target area; and
receiving (S203), by the access network device, second indication information sent by the terminal device, wherein the second indication information comprises an interface determined by the terminal device for performing the V2X communication.

9. The V2X service processing method of any one of claims 6 to 8, wherein in response to the V2X communication in the target area being performed using the Uu interface or in response to the terminal device determining to use the Uu interface for performing the V2X communication, the V2X configuration information of the target area comprises one or more of: a system information block, SIB, a multicast control channel, MCCH, and a single cell-multicast control channel, SC-MCCH; and
wherein in response to the V2X communication in the target area being performed using the PCS interface or in response to the terminal device determining to use the PCS interface for performing the V2X communication, the V2X configuration information of the target area comprises one or more of: synchronization information, a sending resource, and a receiving resource.

10. The V2X service processing method of claim 9, wherein in response to the source area and the target area being in the coverage area of the same access network device, obtaining, by the access network device, the V2X configuration information of the target area comprises:
obtaining, by the access network device, the V2X configuration information of the target area from the access network device itself; and
wherein in response to the source area and the target area being in the coverage areas of different access network devices, the obtaining, by the access network device, the V2X configuration information of the target area comprises:
obtaining, by the source access network device to which the source area belongs, the V2X configuration information of the target area from the target access network device to which the target area belongs via an X2 interface, or obtaining the V2X configuration information of the target area through operation and maintenance, OAM.

11. The V2X service processing method of any one of claims 6 to 8, wherein the terminal device is a user equipment, and the access network device is a base station.

12. A vehicle-to-everything, V2X, service processing apparatus for a terminal device, comprising:
an obtaining module (10), configured to obtain pre-configuration information saved in the terminal device or V2X configuration information of a target area; and
a V2X service module (20), configured to send and/or receive a corresponding V2X service in the target area by using a licensed spectrum or an unlicensed spectrum according to the pre-configuration information saved in the terminal device or the V2X configuration information of the target area obtained by the obtaining module;
wherein in response to V2X communication in a source area being performed using a PCS interface and/or a Uu interface and the V2X communication in the target area being performed using the unlicensed spectrum, or in response to the V2X communication in the source area being performed using the unlicensed spectrum and the V2X communication in the target area being performed using the PCS interface and/or the Uu interface, the apparatus further comprises:
a determining module (30), configured to determine whether to use a pre-configuration resource for performing the V2X communication before the obtaining module obtains the pre-configuration information saved in the terminal device;
wherein the obtaining module (10) is configured to: in response to the determining module (30) determining to use the pre-configuration resource
for performing the V2X communication, obtaining the pre-configuration information saved in the terminal device, wherein the pre-configuration information saved in the terminal device comprises one or more of: synchronization information, a sending resource, a receiving resource, a system information block, SIB, a multicast control channel, MCCH, and a single cell-multicast control channel, SC-MCCH; and
in response to the determining module (30) determining not to use the pre-configuration resource for performing the V2X communication, receiving the V2X configuration information of the target area sent by the access network device.

13. The V2X service processing apparatus of claim 12, wherein the obtaining module (10) comprises:
a sending unit (11), configured to send information to an access network device so that the access network device obtains the V2X configuration information for the terminal device to perform the V2X communication in the target area, wherein the access network device is a source access network device or a target access network device; and
a receiving unit (12), configured to receive the V2X configuration information of the target area sent by the access network device,
wherein information comprises one or more of: measurement report information, resource request information, and interest/capability indication information, wherein the resource request information is used for requesting a Uu interface resource or a PCS interface resource, and the interest/capability indication information is used for indicating a capability of the terminal device to receive a V2X service via the PCS interface or the Uu interface.

14. The V2X service processing apparatus of claim 13, wherein the terminal device is a user equipment, and the access network device is a base station.

15. A computer-readable storage medium, storing computer programs, where the computer programs, when executed, implement the method of any one of claims 1 to 5.

## Patentansprüche

1. Fahrzeug-zu-Allem-, V2X, Dienstverarbeitungsverfahren, Folgendes umfassend:
Erzielen (S110), durch ein Endgerät, von Vorkonfigurationsinformationen, die in dem Endgerät gesichert sind, oder von V2X-Konfigurationsinformationen eines Zielbereichs; und
Senden und/oder Empfangen (S120), durch das Endgerät, in dem Zielbereich, eines entsprechenden V2X-Dienstes unter Verwendung eines lizenzierten Spektrums oder eines unlizenzierten Spektrums gemäß den Vorkonfigurationsinformationen, die in dem Endgerät gesichert sind, oder den V2X-Konfigurationsinformationen des Zielbereichs;
wobei als Reaktion darauf, dass die V2X-Kommunikation in einem Herkunftsbereich unter Verwendung einer PC5-Schnittstelle und/oder einer Uu-Schnittstelle erfolgt und die V2X-Kommunikation in dem Zielbereich unter Verwendung des unlizenzierten Spektrums erfolgt, oder als Reaktion darauf, dass die V2X-Kommunikation in dem Herkunftsbereich unter Verwendung des unlizenzierten Spektrums erfolgt und die V2X-Kommunikation in dem Zielbereich unter Verwendung der PC5-Schnittstelle und/oder der Uu-Schnittstelle erfolgt, bevor durch das Endgerät die Vorkonfigurationsinformationen in dem Endgerät erzielt werden, das Verfahren ferner Folgendes umfasst:
Bestimmen (S100), durch das Endgerät, ob eine Vorkonfigurationsressource für die V2X-Kommunikation zu verwenden ist; und
wobei das Erzielen (S110), durch das Endgerät, der Vorkonfigurationsinformationen, die in dem Endgerät gesichert sind, oder der V2X-Konfigurationsinformationen des Zielbereichs Folgendes umfasst:
als Reaktion darauf, dass das Endgerät bestimmt, die Vorkonfigurationsressource zum Vornehmen der V2X-Kommunikation zu verwenden, Erzielen (S116) der Vorkonfigurationsinformationen, die in dem Endgerät gesichert sind, wobei die Vorkonfigurationsinformationen, die in dem Endgerät gesichert sind, ein oder mehrere Elemente umfassen von: Synchronisationsinformationen, eine Senderessource, eine Empfangsressource, einen SIB, einen MCCH und einen SC-MCCH; und
als Reaktion darauf, dass das Endgerät bestimmt, die Vorkonfigurationsressource zum Vornehmen der V2X-Kommunikation nicht zu verwenden, Empfangen (S117) der V2X-Konfigurationsinformationen des Zielbereichs, die von der Zugangsnetzvorrichtung gesendet werden.

2. V2X-Dienstverarbeitungsverfahren nach Anspruch 1, wobei das Erzielen, durch das Endgerät, der V2X-Konfigurationsinformationen des Zielbereichs Folgendes umfasst:
Senden (S111), durch das Endgerät, von Informationen an eine Zugangsnetzvorrichtung, so dass die Zugangsnetzvorrichtung die V2X-Konfigurationsinformationen für das Endgerät erzielt, um die V2X-Kommunikation in dem Zielbereich vorzunehmen, wobei die Zugangsnetzvorrichtung eine Herkunfts-Zugangsnetzvorrichtung oder eine Ziel-Zugangsnetzvorrichtung ist; und
Empfangen (S112), durch das Endgerät, der V2X-Konfigurationsinformationen des Zielbereichs, die von der Zugangsnetzvorrichtung gesendet werden,
wobei die Informationen ein oder mehrere Elemente umfassen von: Messberichtsinformationen, Informationen zum Anfragen von Ressourcen und Informationen zur Angabe von Interesse/Fähigkeit, wobei die Informationen zum Anfragen von Ressourcen verwendet werden, um eine Uu-Schnittstellenressource oder eine PC5-Schnittstellenressource anzufragen, und die Informationen zur Angabe von Interesse/Fähigkeit verwendet werden, um eine Fähigkeit des Endgeräts, einen V2X-Dienst über die PC5-Schnittstelle oder die Uu-Schnittstelle zu empfangen, anzugeben.

3. V2X-Dienstverarbeitungsverfahren nach Anspruch 2, wobei, wenn die V2X-Kommunikation in dem Zielbereich unter Verwendung der Uu-Schnittstelle und/oder der PC5-Schnittstelle erfolgt, vor dem Empfangen, durch das Endgerät, der V2X-Konfigurationsinformationen des Zielbereichs, die durch die Zugangsnetzvorrichtung gesendet werden, das Verfahren ferner Folgendes umfasst:
Empfangen (S113), durch das Endgerät, von ersten Angabeinformationen, die von der Zugangsnetzvorrichtung gesendet werden, wobei die ersten Angabeinformationen verwendet werden, um anzugeben, dass die Uu-Schnittstelle und/oder die PC5-Schnittstelle in dem Zielbereich unterstützt wird/werden;
Bestimmen (S114), durch das Endgerät, die Uu-Schnittstelle oder die PC5-Schnittstelle für die V2X-Kommunikation zu verwenden; und
Senden (S115), durch das Endgerät, von zweiten Angabeinformationen an die Zugangsnetzvorrichtung, wobei die zweiten Angabeinformationen die Schnittstelle umfassen, die durch das Endgerät für die V2X-Kommunikation bestimmt werden.

4. V2X-Dienstverarbeitungsverfahren nach einem der Ansprüche 1 bis 3, wobei als Reaktion darauf, dass die V2X-Kommunikation in dem Zielbereich unter Verwendung der Uu-Schnittstelle erfolgt, oder als Reaktion darauf, dass das Endgerät bestimmt, die Uu-Schnittstelle für die V2X-Kommunikation zu verwenden, die V2X-Konfigurationsinformationen des Zielbereichs ein oder mehrere Elemente umfassen von: einem Systeminformationsblock, SIB, einem Multicast-Steuerkanal, MCCH, und einem Einzelzellen-Multicast-Steuerkanal, SC-MCCH; und
wobei als Reaktion darauf, dass die V2X-Kommunikation in dem Zielbereich unter Verwendung der PC5-Schnittstelle erfolgt, oder als Reaktion darauf, dass das Endgerät bestimmt, die PC5-Schnittstelle für die V2X-Kommunikation zu verwenden, die V2X-Konfigurationsinformationen des Zielbereichs ein oder mehrere Elemente umfassen von: Synchronisationsinformationen, einer Senderessource und einer Empfangsressource.

5. V2X-Dienstverarbeitungsverfahren nach Anspruch 2 oder 3, wobei das Endgerät eine Benutzereinrichtung ist, und die Zugangsnetzvorrichtung eine Basisstation ist.

6. Fahrzeug-zu-Allem-, V2X, Dienstverarbeitungsverfahren, umfassend:
Erzielen (S210), durch eine Zugangsnetzvorrichtung, von V2X-Konfigurationsinformationen eines Zielbereichs eines Endgeräts; und
Senden (S220), durch die Zugangsnetzvorrichtung, der V2X-Konfigurationsinformationen des Zielbereichs an das Endgerät, so dass das Endgerät einen entsprechenden V2X-Dienst unter Verwendung eines lizenzierten oder eines unlizenzierten Spektrums in dem Zielbereich sendet und/oder empfängt;
wobei als Reaktion darauf, dass die V2X-Kommunikation in einem Herkunftsbereich unter Verwendung einer PC5-Schnittstelle und/oder einer Uu-Schnittstelle erfolgt, und die V2X-Kommunikation in dem Zielbereich unter Verwendung des unlizenzierten Spektrums erfolgt, oder als Reaktion darauf, dass die V2X-Kommunikation in dem Herkunftsbereich unter Verwendung des unlizenzierten Spektrums erfolgt, und die V2X-Kommunikation in dem Zielbereich unter Verwendung der PC5-Schnittstelle und/oder der Uu-Schnittstelle erfolgt, das Senden, durch die Zugangsnetzvorrichtung, der V2X-Konfigurationsinformationen des Zielbereichs an das Endgerät Folgendes umfasst:
als Reaktion darauf, dass das Endgerät bestimmt, auf Grund des Empfangens einer Angabe von der Zugangsnetzvorrichtung zum Ausführen der V2X-Kommunikation unter Verwendung einer trägerübergreifenden geplanten Ressource keine Vorkonfigurationsressource zu verwenden, Senden, durch die Zugangsnetzvorrichtung, der V2X-Konfigurationsinformationen des Zielbereichs an das Endgerät.

7. V2X-Dienstverarbeitungsverfahren nach Anspruch 6, wobei vor dem Erzielen, durch die Zugangsnetzvorrichtung, der V2X-Konfigurationsinformationen des Zielbereichs des Endgeräts, das Verfahren ferner Folgendes umfasst:
Empfangen (S200), durch die Zugangsnetzvorrichtung, von Informationen, die durch das Endgerät gesendet werden,
wobei die Zugangsnetzvorrichtung eine Herkunfts-Zugangsnetzvorrichtung oder eine Ziel-Zugangsnetzvorrichtung ist; und
Erzielen (S201), durch die Zugangsnetzvorrichtung und gemäß den Informationen, der V2X-Konfigurationsinformationen für das Endgerät, um die V2X-Kommunikation in dem Zielbereich vorzunehmen,
wobei die Informationen ein oder mehrere Elemente umfassen von: Messberichtsinformationen, Informationen zum Anfragen von Ressourcen und Informationen zur Angabe von Interesse/Fähigkeit, wobei die Informationen zum Anfragen von Ressourcen verwendet werden, um eine Uu-Schnittstellenressource oder eine PC5-Schnittstellenressource anzufragen, und die Informationen zur Angabe von Interesse/Fähigkeit verwendet werden, um eine Fähigkeit des Endgeräts anzugeben, einen V2X-Dienst über die PC5-Schnittstelle oder die Uu-Schnittstelle zu empfangen.

8. V2X-Dienstverarbeitungsverfahren nach Anspruch 7, wobei, wenn die V2X-Kommunikation in dem Zielbereich unter Verwendung der Uu-Schnittstelle und/oder der PC5-Schnittstelle erfolgt, nach dem Empfangen, durch die Zugangsnetzvorrichtung, der Informationen, die von dem Endgerät gesendet werden, wobei das Verfahren ferner Folgendes umfasst:
Senden (S202), durch die Zugangsnetzvorrichtung, von ersten Angabeinformationen an das Endgerät, wobei die ersten Angabeinformationen verwendet werden, um anzugeben, dass die Uu-Schnittstelle und/oder die PC5-Schnittstelle in dem Zielbereich unterstützt wird/werden; und
Empfangen (S203), durch die Zugangsnetzvorrichtung, von zweiten Angabeinformationen, die von dem Endgerät gesendet werden, wobei die zweiten Angabeinformationen eine Schnittstelle umfassen, die von dem Endgerät bestimmt wird, um die V2X-Kommunikation vorzunehmen.

9. V2X-Dienstverarbeitungsverfahren nach einem der Ansprüche 6 bis 8, wobei als Reaktion darauf, dass die V2X-Kommunikation in dem Zielbereich unter Verwendung der Uu-Schnittstelle erfolgt, oder als Reaktion darauf, dass das Endgerät bestimmt, die Uu-Schnittstelle zum Vornehmen der V2X-Kommunikation zu verwenden, die V2X-Konfigurationsinformationen des Zielbereichs ein oder mehrere Elemente umfassen von: einem Systeminformationsblock, SIB, einem Multicast-Steuerkanal, MCCH, und einem Einzelzellen-Multicast-Steuerkanal, SC-MCCH; und
wobei als Reaktion darauf, dass die V2X-Kommunikation in dem Zielbereich unter Verwendung der PC5-Schnittstelle erfolgt, oder als Reaktion darauf, dass das Endgerät bestimmt, die PC5-Schnittstelle zum Vornehmen der V2X-Kommunikation zu verwenden, die V2X-Konfigurationsinformationen des Zielbereichs ein oder mehrere Elemente umfassen von: Synchronisationsinformationen, einer Senderessource und einer Empfangsressource.

10. V2X-Dienstverarbeitungsverfahren nach Anspruch 9, wobei als Reaktion darauf, dass sich der Herkunftsbereich und der Zielbereich in dem Abdeckungsbereich der gleichen Zugangsnetzvorrichtung befinden, das Erzielen, durch die Zugangsnetzvorrichtung, der V2X-Konfigurationsinformationen des Zielbereichs Folgendes umfasst:
Erzielen, durch die Zugangsnetzvorrichtung, der V2X-Konfigurationsinformationen des Zielbereichs von der Zugangsnetzvorrichtung selber; und
wobei als Reaktion darauf, dass sich der Herkunftsbereich und der Zielbereich in den Abdeckungsbereichen verschiedener Zugangsnetzvorrichtungen befinden, das Erzielen durch die Zugangsnetzvorrichtung, der V2X-Konfigurationsinformationen des Zielbereichs Folgendes umfasst:
Erzielen, durch die Herkunfts-Zugangsnetzvorrichtung, zu welcher der Herkunftsbereich gehört, der V2X-Konfigurationsinformationen des Zielbereichs von der Ziel-Zugangsnetzvorrichtung, zu welcher der Zielbereich gehört, über eine X2-Schnittstelle, oder Erzielen der V2X-Konfigurationsinformationen des Zielbereichs durch Betrieb und Wartung, OAM.

11. V2X-Dienstverarbeitungsverfahren nach einem der Ansprüche 6 bis 8, wobei das Endgerät eine Benutzereinrichtung ist, und die Zugangsnetzvorrichtung eine Basisstation ist.

12. Fahrzeug-zu-Allem-, V2X, Dienstverarbeitungsgerät für ein Endgerät, umfassend:
ein Erzielungsmodul (10), das dazu konfiguriert ist, Vorkonfigurationsinformationen, die in dem Endgerät gesichert sind, oder V2X-Konfigurationsinformationen eines Zielbereichs zu erzielen; und
ein V2X-Dienstmodul (20), das dazu konfiguriert ist, einen entsprechenden V2X-Dienst in dem Zielbereich unter Verwendung eines lizenzierten Spektrums oder eines unlizenzierten Spektrums gemäß den Vorkonfigurationsinformationen, die in dem Endgerät gesichert sind, oder den V2X-Konfigurationsinformationen des Zielbereichs, die durch das Erzielungsmodul erzielt werden, zu senden und/oder zu empfangen;
wobei als Reaktion darauf, dass die V2X-Kommunikation in einem Herkunftsbereich unter Verwendung einer PC5-Schnittstelle und/oder einer Uu-Schnittstelle erfolgt, und die V2X-Kommunikation in dem Zielbereich unter Verwendung des unlizenzierten Spektrums erfolgt, oder als Reaktion darauf, dass die V2X-Kommunikation in dem Herkunftsbereich unter Verwendung des unlizenzierten Spektrums erfolgt, und die V2X-Kommunikation in dem Zielbereich unter Verwendung der PC5-Schnittstelle und/oder der Uu-Schnittstelle erfolgt, das Gerät ferner Folgendes umfasst:
ein Bestimmungsmodul (30), das dazu konfiguriert ist, zu bestimmen, ob eine Vorkonfigurationsressource zum Vornehmen der V2X-Kommunikation zu verwenden ist, bevor das Erzielungsmodul die Vorkonfigurationsinformationen erzielt, die in dem Endgerät gesichert sind;
wobei das Erzielungsmodul (10) konfiguriert ist zum:
als Reaktion darauf, dass das Bestimmungsmodul (30) bestimmt, die Vorkonfigurationsressource zum Vornehmen der V2X-Kommunikation zu verwenden, Erzielen der Vorkonfigurationsinformationen, die in dem Endgerät gespeichert sind, wobei die Vorkonfigurationsinformationen, die in dem Endgerät gesichert sind, ein oder mehrere Elemente umfassen von: Synchronisationsinformationen, einer Senderessource, einer Empfangsressource, einem Systeminformationsblock, SIB, einem Multicast-Steuerkanal, MCCH, und einem Einzelzellen-Multicast-Steuerkanal, SC-MCCH; und
als Reaktion darauf, dass das Bestimmungsmodul (30) bestimmt, die Vorkonfigurationsressource zum Vornehmen der V2X-Kommunikation nicht zu verwenden, Empfangen der V2X-Konfigurationsinformationen des Zielbereichs, die von der Zugangsnetzvorrichtung gesendet werden.

13. V2X-Dienstverarbeitungsgerät nach Anspruch 12, wobei das Erzielungsmodul (10) Folgendes umfasst:
eine Sendeeinheit (11), die dazu konfiguriert ist, Informationen an eine Zugangsnetzvorrichtung zu senden, so dass die Zugangsnetzvorrichtung die V2X-Konfigurationsinformationen für das Endgerät erzielt, um die V2X-Kommunikation in dem Zielbereich vorzunehmen, wobei die Zugangsnetzvorrichtung eine Herkunfts-Zugangsnetzvorrichtung oder eine Ziel-Zugangsnetzvorrichtung ist; und
eine Empfangseinheit (12), die dazu konfiguriert ist, die V2X-Konfigurationsinformationen des Zielbereichs, die von der Zugangsnetzvorrichtung gesendet werden, zu empfangen,
wobei die Informationen ein oder mehrere Elemente umfassen von: Messberichtsinformationen, Informationen zum Anfragen von Ressourcen und Informationen zur Angabe von Interesse/Fähigkeit, wobei die Informationen zum Anfragen von Ressourcen verwendet werden, um eine Uu-Schnittstellenressource oder eine PC5-Schnittstellenressource anzufragen, und die Informationen zur Angabe von Interesse/Fähigkeit verwendet werden, um eine Fähigkeit des Endgeräts, einen V2X-Dienst über die PC5-Schnittstelle oder die Uu-Schnittstelle zu empfangen, anzugeben.

14. V2X-Dienstverarbeitungsgerät nach Anspruch 13, wobei das Endgerät eine Benutzereinrichtung ist, und die Zugangsnetzvorrichtung eine Basisstation ist.

15. Computerlesbares Speichermittel, das Computerprogramme speichert, wobei die Computerprogramme, wenn sie ausgeführt werden, das Verfahren nach einem der Ansprüche 1 bis 5 umsetzen.

## Revendications

1. Procédé de traitement de service de véhicule à véhicule, V2X, comprenant les étapes suivantes :
l'obtention (S110), par un terminal, d'informations de préconfiguration sauvegardées dans le terminal ou d'informations de configuration V2X d'une zone cible ; et
l'émission et/ou la réception (S120), par le terminal, dans la zone cible, d'un service V2X correspondant en utilisant un spectre sous licence ou un spectre sans licence selon les informations de préconfiguration sauvegardées dans le terminal ou les informations de configuration V2X de la zone cible ;
dans lequel, en réponse à la communication V2X dans une zone d'origine utilisant une interface PC5 et/ou une interface Uu et la communication V2X dans la zone de destination utilisant le spectre sans licence, ou en réponse à la communication V2X dans la zone d'origine utilisant le spectre sans licence et la communication V2X dans la zone de destination utilisant l'interface PC5 et/ou l'interface Uu, avant que les informations de préconfiguration soient obtenues dans le terminal par le terminal, le procédé comprenant en outre ce qui suit :
déterminer (S100), par le terminal, si une ressource de préconfiguration doit être utilisée pour la communication V2X ; et
dans lequel l'obtention (S110), par le terminal, des informations de préconfiguration sauvegardées dans le terminal ou des informations de configuration V2X de la zone cible comprend
en réponse à la détermination par le terminal d'utiliser la ressource de préconfiguration pour effectuer la communication V2X, l'obtention (S116) des informations de préconfiguration sauvegardées dans le terminal, les informations de préconfiguration sauvegardées dans le terminal comprenant un ou plusieurs éléments parmi : des informations de synchronisation, une ressource d'émission, une ressource de réception, un SIB, un MCCH et un SC-MCCH ; et
en réponse au fait que le terminal détermine de ne pas utiliser la ressource de préconfiguration pour effectuer la communication V2X, recevoir (S117) les informations de configuration V2X de la zone cible envoyées par le dispositif de réseau d'accès.

2. Procédé de traitement de service V2X selon la revendication 1, dans lequel l'obtention, par le terminal, des informations de configuration V2X de la zone cible comprend :
l'envoi (S111), par le terminal, d'informations à un dispositif de réseau d'accès de telle sorte que le dispositif de réseau d'accès obtienne les informations de configuration V2X pour le terminal afin d'effectuer la communication V2X dans la zone cible, le dispositif de réseau d'accès étant un dispositif de réseau d'accès d'origine ou un dispositif de réseau d'accès cible ; et
la réception (S112), par le terminal, des informations de configuration V2X de la zone cible envoyées par le dispositif de réseau d'accès,
les informations comprenant un ou plusieurs éléments parmi : des informations de rapport de mesure, des informations de demande de ressources et des informations d'indication d'intérêt/capacité, les informations de demande de ressources étant utilisées pour demander une ressource d'interface Uu ou une ressource d'interface PC5 , et les informations d'indication d'intérêt/capacité étant utilisées pour indiquer une capacité du terminal à recevoir un service V2X via l'interface PC5 ou l'interface Uu.

3. Procédé de traitement de service V2X selon la revendication 2, dans lequel, lorsque la communication V2X dans la zone cible est effectuée en utilisant l'interface Uu et/ou l'interface PC5, avant la réception, par le terminal, des informations de configuration V2X de la zone cible envoyées par le dispositif de réseau d'accès, le procédé comprend en outre ce qui suit :
la réception (S113), par le terminal, de premières informations d'indication envoyées par le dispositif de réseau d'accès, les premières informations d'indication étant utilisées pour indiquer que l'interface Uu et/ou l'interface PC5 est/sont supportée(s) dans la zone cible;
la détermination (S114), par le terminal, d'utiliser l'interface Uu ou l'interface PC5 pour la communication V2X ; et
l'envoi (S115), par le terminal, de secondes informations d'indication au dispositif de réseau d'accès, les secondes informations d'indication comprenant l'interface déterminée par le terminal pour la communication V2X.

4. Procédé de traitement de service V2X selon l'une quelconque des revendications 1 à 3, dans lequel, en réponse au fait que la communication V2X dans la zone cible est effectuée en utilisant l'interface Uu ou en réponse au fait que le terminal détermine d'utiliser l'interface Uu pour la communication V2X, les informations de configuration V2X de la zone cible comprennent un ou plusieurs éléments parmi : un bloc d'informations système, SIB, un canal de commande de multidiffusion, MCCH, et un canal de commande de multidiffusion à cellule unique, SC-MCCH ; et
dans lequel, en réponse au fait que la communication V2X dans la zone cible est effectuée en utilisant l'interface PC5, ou en réponse au fait que le terminal détermine d'utiliser l'interface PC5 pour la communication V2X, les informations de configuration V2X de la zone cible comprennent un ou plusieurs éléments parmi : des informations de synchronisation, une ressource d'émission et une ressource de réception.

5. Procédé de traitement de service V2X selon la revendication 2 ou 3, dans lequel le terminal est un équipement utilisateur et le dispositif de réseau d'accès est une station de base.

6. Procédé de traitement de service de véhicule à tout, V2X, comprenant :
l'obtention (S210), par un dispositif de réseau d'accès, d'informations de configuration V2X d'une zone cible d'un terminal ; et
l'envoi (S220), par le dispositif de réseau d'accès, des informations de configuration V2X de la zone cible au terminal, de sorte que le terminal envoie et/ou reçoive un service V2X correspondant en utilisant un spectre sous licence ou sans licence dans la zone cible ;
dans lequel, en réponse au fait que la communication V2X dans une zone d'origine se fait en utilisant une interface PC5 et/ou une interface Uu et que la communication V2X dans la zone de destination se fait en utilisant le spectre non licencié, ou en réponse au fait que la communication V2X dans la zone de destination se fait en utilisant le spectre licencié, que la communication V2X dans la zone d'origine est effectuée en utilisant le spectre non licencié, et que la communication V2X dans la zone de destination est effectuée en utilisant l'interface PC5 et/ou l'interface Uu, l'envoi, par le dispositif de réseau d'accès, des informations de configuration V2X de la zone de destination au terminal comprend :
en réponse au fait que le terminal détermine de ne pas utiliser une ressource de préconfiguration en raison de la réception d'une indication provenant du dispositif de réseau d'accès pour effectuer la communication V2X en utilisant une ressource planifiée à travers la porteuse, l'envoi, par le dispositif de réseau d'accès, des informations de configuration V2X de la zone cible au terminal.

7. Procédé de traitement de service V2X selon la revendication 6, dans lequel, avant d'obtenir, par le dispositif de réseau d'accès, les informations de configuration V2X de la zone cible du terminal, le procédé comprend en outre ce qui suit :
la réception (S200), par le dispositif de réseau d'accès, d'informations envoyées par le terminal,
dans lequel le dispositif de réseau d'accès est un dispositif de réseau d'accès d'origine ou un dispositif de réseau d'accès de destination ; et
obtenir (S201), par le dispositif de réseau d'accès et selon les informations, des informations de configuration V2X pour le terminal, pour effectuer la communication V2X dans la zone cible,
lesdites informations comprenant un ou plusieurs éléments parmi : des informations de rapport de mesure, des informations de demande de ressources et des informations d'indication d'intérêt/capacité, dans lesquelles les informations de demande de ressources sont utilisées pour demander une ressource d'interface Uu ou une ressource d'interface PC5, et les informations d'indication d'intérêt/capacité sont utilisées pour indiquer une capacité du terminal à recevoir un service V2X via l'interface PC5 ou l'interface Uu.

8. Procédé de traitement de service V2X selon la revendication 7, dans lequel, lorsque la communication V2X dans la zone cible est effectuée en utilisant l'interface Uu et/ou l'interface PC5, après réception, par le dispositif de réseau d'accès, des informations envoyées par le terminal, le procédé comprend en outre ce qui suit :
l'envoi (S202), par le dispositif de réseau d'accès, de premières informations d'indication au terminal, les premières informations d'indication étant utilisées pour indiquer que l'interface Uu et/ou l'interface PC5 est/sont supportée(s) dans la zone cible; et
la réception (S203), par le dispositif de réseau d'accès, de secondes informations d'indication envoyées par le terminal, les secondes informations d'indication comprenant une interface déterminée par le terminal pour effectuer la communication V2X.

9. Procédé de traitement de service V2X selon l'une quelconque des revendications 6 à 8, dans lequel, en réponse au fait que la communication V2X dans la zone cible est effectuée en utilisant l'interface Uu ou en réponse au fait que le terminal détermine d'utiliser l'interface Uu pour effectuer la communication V2X, les informations de configuration V2X de la zone cible comprennent un ou plusieurs éléments parmi : un bloc d'informations système, SIB, un canal de commande de multidiffusion, MCCH, et un canal de commande de multidiffusion à cellule unique, SC-MCCH ; et
dans lequel, en réponse au fait que la communication V2X dans la zone cible est effectuée en utilisant l'interface PC5, ou en réponse au fait que le terminal détermine d'utiliser l'interface PC5 pour effectuer la communication V2X, les informations de configuration V2X de la zone cible comprennent un ou plusieurs éléments parmi : des informations de synchronisation, une ressource d'émission et une ressource de réception.

10. Procédé de traitement de service V2X selon la revendication 9, dans lequel, en réponse au fait que la zone d'origine et la zone de destination sont situées dans la zone de couverture du même dispositif de réseau d'accès, l'obtention, par le dispositif de réseau d'accès, des informations de configuration V2X de la zone de destination comprend :
l'obtention, par le dispositif de réseau d'accès, des informations de configuration V2X de la zone cible à partir du dispositif de réseau d'accès lui-même ; et
dans lequel, en réponse au fait que la zone d'origine et la zone de destination sont situées dans les zones de couverture de différents dispositifs de réseau d'accès, l'obtention, par le dispositif de réseau d'accès, des informations de configuration V2X de la zone de destination comprend :
l'obtention, par le dispositif de réseau d'accès d'origine auquel appartient la zone d'origine, des informations de configuration V2X de la zone cible à partir du dispositif de réseau d'accès cible auquel appartient la zone cible par l'intermédiaire d'une interface X2, ou l'obtention des informations de configuration V2X de la zone cible par l'intermédiaire de l'exploitation et de la maintenance, OAM.

11. Procédé de traitement de services V2X selon l'une quelconque des revendications 6 à 8, dans lequel le terminal est un équipement utilisateur et le dispositif de réseau d'accès est une station de base.

12. Dispositif de traitement de service de véhicule à tout, V2X, pour un terminal, comprenant :
un module d'obtention (10) configuré pour obtenir des informations de préconfiguration sauvegardées dans le terminal ou des informations de configuration V2X d'une zone cible ; et
un module de service V2X (20) configuré pour émettre et/ou recevoir un service V2X correspondant dans la zone cible en utilisant un spectre sous licence ou un spectre non licencié selon les informations de préconfiguration sauvegardées dans le terminal ou les informations de configuration V2X de la zone cible obtenues par le module d'obtention ;
dans lequel, en réponse au fait que la communication V2X dans une zone d'origine est effectuée en utilisant une interface PC5 et/ou une interface Uu, et la communication V2X dans la zone de destination est effectuée en utilisant le spectre non licencié, ou en réponse au fait que la communication V2X dans la zone d'origine est effectuée en utilisant le spectre non liencié, et la communication V2X dans la zone de destination est effectuée en utilisant l'interface PC5 et/ou l'interface Uu, le dispositif comprend en outre ce qui suit :
un module de détermination (30) configuré pour déterminer si une ressource de préconfiguration doit être utilisée pour effectuer la communication V2X avant que le module d'obtention obtienne les informations de préconfiguration sauvegardées dans le terminal ;
dans lequel le module d'obtention (10) est configuré pour :
en réponse au fait que le module de détermination (30) détermine d'utiliser la ressource de préconfiguration pour effectuer la communication V2X, obtenir les informations de préconfiguration stockées dans le terminal, dans lequel les informations de préconfiguration sauvegardées dans le terminal comprennent un ou plusieurs éléments parmi : des informations de synchronisation, une ressource d'émission, une ressource de réception, un bloc d'informations système, SIB, un canal de commande de multidiffusion, MCCH, et un canal de commande de multidiffusion à cellule unique, SC-MCCH ; et
en réponse au fait que le module de détermination (30) détermine de ne pas utiliser la ressource de préconfiguration pour effectuer la communication V2X, recevoir les informations de configuration V2X de la zone cible envoyées par le dispositif de réseau d'accès.

13. Dispositif de traitement de service V2X selon la revendication 12, dans lequel le module d'obtention (10) comprend :
une unité de transmission (11) configurée pour transmettre des informations à un dispositif de réseau d'accès de sorte que le dispositif de réseau d'accès obtienne les informations de configuration V2X pour le terminal afin d'effectuer la communication V2X dans la zone cible, le dispositif de réseau d'accès étant un dispositif de réseau d'accès d'origine ou un dispositif de réseau d'accès cible ; et
une unité de réception (12) configurée pour recevoir les informations de configuration V2X de la zone cible envoyées par le dispositif de réseau d'accès,
lesdites informations comprenant un ou plusieurs éléments parmi : des informations de rapport de mesure, des informations de demande de ressources et des informations d'indication d'intérêt/capacité, dans lesquelles les informations de demande de ressources sont utilisées pour demander une ressource d'interface Uu ou une ressource d'interface PC5, et les informations d'indication d'intérêt/capacité sont utilisées pour indiquer une capacité du terminal à recevoir un service V2X via l'interface PC5 ou l'interface Uu.

14. Dispositif de traitement de service V2X selon la revendication 13, dans lequel le terminal est un dispositif utilisateur, et le dispositif de réseau d'accès est une station de base.

15. Moyen de stockage lisible par ordinateur qui stocke des programmes informatiques , lesdits programmes informatiques, lorsqu'ils sont exécutés, mettant en œuvre le procédé selon l'une quelconque des revendications 1 à 5.
